# EUROPÄISCHE PATENTSCHRIFT

(11) **EP 4 048 894 B1**
(45) Veröffentlichungstag und Bekanntmachung des Hinweises auf die Patenterteilung: **30.04.2025**
(21) Anmeldenummer: 20800031.5
(22) Anmeldetag: 22.10.2020
(51) Int. Cl.: F04B 43/00, F04C 5/00, F04B 43/12, F04B 43/08, F04C 15/00, F01C 19/00, F04B 53/20, F04B 53/22

(54) **FÖRDERVORRICHTUNG ZUMINDEST ZU EINEM FÖRDERN EINES FLUIDS UND PUMPE MIT EINER DERARTIGEN FÖRDERVORRICHTUNG**
PUMPING DEVICE AT LEAST FOR PUMPING A FLUID AND PUMP COMPRISING A PUMPING DEVICE OF THIS TYPE
DISPOSITIF DE POMPAGE PERMETTANT AU MOINS DE POMPER UN FLUIDE ET POMPE COMPRENANT UN DISPOSITIF DE POMPAGE DE CE TYPE

(30) Priorität: 23.10.2019 DE 102019128679
(43) Veröffentlichungstag der Anmeldung: 31.08.2022
(73) Patentinhaber: Watson Marlow GmbH, 41569 Rommerskirchen (DE)
(72) Erfinder: KRUTZENBICHLER, Alois, 83278 Traunstein (DE); FREIHERR VARNBÜLER VON UND ZU HEMMINGEN-R., Lars, 75446 Wiernsheim-Pinache (DE); RITSCHKA, Raymond, 71287 Weissach (DE); HAUG, Nico, 71069 Sindelfingen (DE)
(74) Vertreter: HL Kempner Patentanwälte, Solicitors (England and Wales), Irish Patent Agents Partnerschaft mbB
(86) Internationale Anmeldenummer: PCT/EP2020/079817
(87) Internationale Veröffentlichungsnummer: WO 2021/078898

(56) Entgegenhaltungen:
- EP-A1- 2 733 355
- WO-A1-2016/173798
- DE-A1- 102017 104 400
- GB-A- 2 564 677
- GB-A- 583 578

## Beschreibung

### Stand der Technik

Die Erfindung betrifft eine Fördervorrichtung zumindest zu einem Fördern eines Fluids und eine Pumpe mit einer derartigen Fördervorrichtung.

Aus DE 10 2017 104400 A1 ist bereits eine Fördervorrichtung zumindest zu einem Fördern eines Fluids bekannt, wobei die bereits bekannte Fördervorrichtung zumindest einen Förderraum, zumindest ein den Förderraum zumindest teilweise begrenzendes Förderraumelement, das formstabil ausgebildet ist, und zumindest ein elastisch verformbares, insbesondere ringförmiges, Förderelement aufweist, das zusammen mit dem Förderraumelement den Förderraum begrenzt und an dem Förderraumelement angeordnet ist. Ferner ist aus der DE 10 2017 104400 A1 bereits eine Pumpe mit einer derartigen Fördervorrichtung bekannt.

Die DE 10 2017 104400 A1 offenbart nicht ein Förderelement mit zumindest einem Dichtungsfortsatz, der einteilig mit einem Grundkörper des Förderelements ausgebildet ist; ein Förderraumelement mit einer Dichtungsnut; und eine die Dichtungsnut begrenzende Randfläche des Förderraumelements, die direkt angrenzend an zumindest einen von drei Kreisbogenabschnitten des Förderraumelements angeordnet ist.

Des Weiteren ist aus US 3 922 119 bereits eine Fördervorrichtung zumindest zu einem Fördern eines Fluids bekannt, wobei die Fördervorrichtung zumindest einen Förderraum, zumindest ein den Förderraum zumindest teilweise begrenzendes Förderraumelement, das formstabil ausgebildet ist, und zumindest ein elastisch verformbares Förderelement, das zusammen mit dem Förderraumelement den Förderraum begrenzt und an dem Förderraumelement angeordnet ist, wobei das Förderelement zumindest einen Dichtungsfortsatz aufweist, der einteilig mit einem Grundkörper des Förderelements ausgebildet und in einem am Förderraumelement angeordneten Zustand des Förderelements zumindest teilweise in einer Dichtungsnut des Förderraumelements angeordnet ist.

EP 2 733 355 A1 zeigt eine Pumpe mit einer ringförmigen, elastischen Fördermembran, wobei der Förderraum durch eine ringförmige Nut in einem Gehäuse gebildet ist, über welche die Fördermembran gelegt ist, so dass sie in radialer Richtung ausgedehnt und bewegt werden kann. Aus GB 2 564 677 A, GB 583 578 A und WO 2016/173 798 A1 ist jeweils eine Pumpe mit einer ringförmigen Fördermembran bekannt, die von einer Exzenteranordnung komprimiert wird.

Die Aufgabe der Erfindung besteht insbesondere darin, eine gattungsgemäße Fördervorrichtung und/oder Pumpe mit verbesserten Eigenschaften hinsichtlich einer vorteilhaften Förderfunktion bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Fördervorrichtung zumindest zu einem Fördern eines Fluids, mit zumindest einem Förderraum, mit zumindest einem den Förderraum zumindest teilweise begrenzenden Förderraumelement, das formstabil ausgebildet ist, und mit zumindest einem elastisch verformbaren, insbesondere ringförmigen, Förderelement, insbesondere Fördermembran, das zusammen mit dem Förderraumelement den Förderraum begrenzt und an dem Förderraumelement angeordnet ist, wobei das Förderelement zumindest einen Dichtungsfortsatz aufweist, der einteilig mit einem Grundkörper des Förderelements ausgebildet und in einem am Förderraumelement angeordneten Zustand des Förderelements zumindest teilweise in einer Dichtungsnut des Förderraumelements angeordnet ist.

Es wird vorgeschlagen, dass das Förderraumelement zu einem Zusammenwirken mit einer, insbesondere der zuvor bereits genannten, Förderfläche des Grundkörpers des Förderelements zu einem Fördern eines Fluids eine, insbesondere die bereits zuvor genannte, Konterfläche aufweist, die sich über zumindest drei, insbesondere betrachtet in einem Querschnitt, aufeinanderfolgende Kreisbogenabschnitte erstreckt, wobei zumindest ein die Dichtungsnut begrenzender, insbesondere der bereits zuvor genannte, Randbereich des Förderraumelements direkt angrenzend an zumindest einen der drei Kreisbogenabschnitte angeordnet ist. Die Kreisbogenabschnitte bilden bevorzugt eine Konterfläche des Förderraumelements. Zwei der drei Kreisbogenabschnitte bilden vorzugsweise Erhebungen der Konterfläche und sind außen angeordnet. Einer der drei Kreisbogenabschnitte bildet vorzugsweise eine Vertiefung und ist innen, insbesondere zwischen den Erhebungen angeordnet. Es ist denkbar, dass die drei Kreisbogenabschnitte unterschiedliche oder gleiche Radien aufweisen. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Fierstellung in einem Ein- oder Mehrkomponentenspritzverfahren und vorteilhaft aus einem einzelnen Rohling. Bevorzugt ist der Dichtungsfortsatz auf einer Förderseite des Grundkörpers des Förderelements angeordnet. Insbesondere erstreckt sich der Dichtungsfortsatz auf der Förderseite über eine Förderfläche des Förderelements hinweg, insbesondere betrachtet entlang einer zumindest im Wesentlichen senkrecht zur Förderfläche verlaufenden Richtung. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise weist der Dichtungsfortsatz einen Dichtungsüberstand auf, der sich entlang der zumindest im Wesentlichen senkrecht zur Förderfläche verlaufenden Richtung über die Förderfläche hinweg erstreckt. Der Dichtungsüberstand weist, betrachtet in einer zumindest im Wesentlichen senkrecht zu einer Hauptförderrichtung des Förderraums, entlang derer ein Fluid durch den Förderraum förderbar ist, verlaufenden Ebene, einen Querschnitt auf, der halbkreisförmig oder elliptisch ausgebildet ist. Bevorzugt weist der Es ist jedoch auch denkbar, dass der Dichtungsüberstand einen anderen, einem Fachmann als sinnvoll erscheinenden Querschnitt aufweist. Der Dichtungsüberstand oder der gesamte Dichtungsfortsatz ist wulstartig an einem Außenrand des Grundkörpers angeordnet. Der Dichtungsüberstand weist eine Haupterstreckungsrichtung auf, die zumindest im Wesentlichen senkrecht zur Förderfläche ausgerichtet ist, insbesondere in einer von der Förderseite weg gerichtete Richtung ausgerichtet ist.

Vorzugsweise ist die Förderseite des Grundkörpers auf einer einer Aktivierungsseite des Grundkörpers abgewandten Seite des Grundkörpers angeordnet. Insbesondere bildet die Förderseite eine Außenseite des Grundkörpers. Vorzugsweise bildet die Aktivierungsseite eine Innenseite des Grundkörpers. Bevorzugt ist an der Aktivierungsseite zumindest ein Aktivierungsfortsatz des Förderelements angeordnet. Bevorzugt ist der Aktivierungsfortsatz zu einem Zusammenwirken mit einem Übertragungselement einer Antriebseinheit einer die Fördervorrichtung umfassenden Pumpe, insbesondere mit zumindest zwei Übertragungselementen der Antriebseinheit, vorgesehen. Das/die Übertragungselemente ist/sind vorzugsweise an einem Antriebselement der Antriebseinheit der die Fördervorrichtung umfassenden Pumpe angeordnet. Bevorzugt weist der Grundkörper eine ringförmige Ausgestaltung auf. Vorzugsweise weist der Grundkörper eine geschlitzte ringförmige Ausgestaltung auf. Insbesondere weist der Grundkörper betrachtet in einer Ebene, insbesondere in einer zumindest im Wesentlichen senkrecht zu einer Antriebsachse der Antriebsachse verlaufenden Ebene, eine Querschnittsform auf, die sich im Wesentlichen aus einem Kreisbogen oder einem offenen Ring, der sich entlang eines Winkelbereichs von weniger als 360° und insbesondere von mehr als 90° erstreckt, und zwei quer zum Kreisbogen oder zum offenen Ring verlaufende Ein- und/oder Auslassfortsätze, die direkt an den Kreisbogen oder den offenen Ring angrenzen, insbesondere in Endbereichen des Kreisbogens oder des offenen Rings, zusammensetzt. Der Aktivierungsfortsatz ist vorzugsweise im Bereich eines Kreisbogenverlaufs oder eines Ringverlaufs des Grundkörpers am Grundkörper, insbesondere an einer Innenseite des Grundkörpers, angeordnet. Eine maximale Längserstreckung des Aktivierungsfortsatzes ist insbesondere zumindest um 5 %, bevorzugt um 10 % und ganz besonders bevorzugt um zumindest 20 % kleiner als eine maximale Längserstreckung des Grundkörpers. Bevorzugt erstreckt sich der Aktivierungsfortsatz zumindest im Wesentlichen entlang einer Gesamterstreckung des Kreisbogens oder des offenen Rings des Grundkörpers, insbesondere bis zu Endbereichen des Kreisbogens oder des offenen Rings, an denen jeweils ein Ein- und/oder Auslassfortsatz des Grundkörpers angeordnet ist. Vorzugsweise erstreckt sich der Aktivierungsfortsatz entlang eines Winkelbereichs insbesondere von weniger als 360°, bevorzugt von weniger als 350° und besonders bevorzugt von mehr als 180° an der Aktivierungsseite.

Bevorzugt weist die Dichtungsnut eine zum Dichtungsfortsatz, insbesondere zumindest zum Dichtungsüberstand, korrespondierende Form, insbesondere einen korrespondierenden Querschnitt, auf. Die Dichtungsnut weist bevorzugt einen u-förmigen Querschnitt auf, insbesondere betrachtet in der zumindest im Wesentlichen senkrecht zur Hauptförderrichtung des Förderraums verlaufenden Ebene. Die Dichtungsnut ist vorzugsweise an einer dem Förderelement zugewandten Innenseite des Förderraumelements angeordnet. Bevorzugt ist die Dichtungsnut in einem Außenrandbereich des Förderraumelements angeordnet. Vorzugsweise weist die Dichtungsnut zu einer Außenkante des Förderraumelements, die einen Übergang zwischen der dem Förderelement zugewandten Innenseite und einer dem Förderelement abgewandten Außenseite des Förderraumelements bildet, einen maximalen Abstand auf, der insbesondere kleiner ist als 15 mm, bevorzugt kleiner ist als 10 mm, besonders bevorzugt kleiner ist 8 mm und ganz besonders bevorzugt einen Wert zwischen 12 mm und 6 mm aufweist. Bevorzugt weist die Dichtungsnut zur Außenkante des Förderraumelements einen maximalen Abstand auf, der insbesondere zumindest einer Hälfte, insbesondere 50 %, einer maximalen Quererstreckung der Dichtungsnut entspricht, bevorzugt zumindest der maximalen Quererstreckung der Dichtungsnut entspricht und besonders bevorzugt einem Vielfachen der maximalen Quererstreckung der Dichtungsnut entspricht. Die maximale Quererstreckung verläuft vorzugsweise zumindest im Wesentlichen parallel zur Antriebsachse der Antriebseinheit und/oder zumindest im Wesentlichen senkrecht zur Hauptförderrichtung des Förderraums.

Vorteilhafterweise ist das Förderelement, insbesondere die Fördermembran, infolge einer Einwirkung einer in eine von der Aktivierungsseite abgewandte Richtung wirkenden Antriebskraft von der Konterfläche des Förderraumelements weg bewegbar, insbesondere von der Konterfläche abhebbar, insbesondere zu einer Erzeugung eines Unterdrucks in dem Förderraum. Vorzugsweise ist infolge einer Bewegung des Förderelements, insbesondere der Fördermembran, weg von der Konterfläche ein Unterdruck erzeugbar, der insbesondere kleiner ist als -0,1 bar, bevorzugt kleiner ist als - 0,2 bar und besonders bevorzugt kleiner ist als -0,3 bar, insbesondere bezogen auf einen die Fördervorrichtung umgebenden atmosphärischen Druck. Es kann eine vorteilhafte Förderung eines Fördermittels in den zumindest teilweise durch die Konterfläche und die Förderfläche begrenzten Förderraum der Fördervorrichtung erreicht werden.

Bevorzugt ist das Förderelement, insbesondere die Fördermembran, mittels der Antriebseinheit derart antreibbar, dass eine Förderung eines Fördermittels, insbesondere eines Fluids, gemäß einem Wanderwellenprinzip (vgl. beispielsweise die Offenbarung der EP 1 317 626 B1) ermöglichbar ist. Die Antriebseinheit kann als mechanische Antriebseinheit, als magnetische Antriebseinheit, als piezoelektrische Antriebseinheit, als hydraulische Antriebseinheit, als pneumatische Antriebseinheit, als elektrische Antriebseinheit, als magnetorheologische Antriebseinheit, als Carbontubes-Antriebseinheit, als eine Kombination aus einer der genannten Arten von Antriebseinheiten oder als eine andere, einem Fachmann als sinnvoll erscheinende Antriebseinheit ausgebildet sein. Vorzugsweise weist die Antriebseinheit zumindest das Antriebselement auf, das dazu vorgesehen ist, auf das Förderelement, insbesondere die Fördermembran, einzuwirken. Es ist jedoch auch denkbar, dass die Antriebseinheit eine von eins abweichende Anzahl an Antriebselementen aufweist, die dazu vorgesehen sind, auf das Förderelement einzuwirken. Vorzugsweise ist das Antriebselement dazu vorgesehen, eine elastische Verformung des Förderelements, insbesondere der Fördermembran, infolge einer Einwirkung einer Antriebskraft auf das Förderelement, insbesondere die Fördermembran, hervorzurufen. Das Antriebselement kann jegliche, einem Fachmann als sinnvoll erscheinende Ausgestaltungen aufweisen, wie beispielsweise eine Ausgestaltung als Stößel, als Fortsatz, als Eingriffsring, als Haken, als Greifelement o. dgl. Bevorzugt ist das Antriebselement als Exzenterwelle ausgebildet. Vorzugsweise ist die Exzenterwelle mittels einer Motoreinheit einer Pumpe, die die Fördervorrichtung umfasst, auf eine, einem Fachmann bereits bekannte Art und Weise rotierend antreibbar. Die Motoreinheit kann als Eletkromotoreinheit, als Verbrennungsmotoreinheit, als Hybridmotoreinheit o. dgl. ausgebildet sein. Das Antriebselement weist vorzugsweise eine Rotationsachse auf. Die Rotationsachse verläuft bevorzugt quer, insbesondere zumindest im Wesentlichen senkrecht zu einer Hauptförderrichtung des Förderraums, entlang derer eine Fluid durch den Förderraum förderbar ist.

Der Förderraum der Fördervorrichtung wird bevorzugt durch den Grundkörper des Förderelements und das Förderraumelement begrenzt. Der Förderraum der Fördervorrichtung wird vorzugsweise durch die Förderfläche und die der Förderfläche gegenüberliegenden Konterfläche begrenzt. Das Förderraumelement ist vorzugsweise formstabil ausgebildet. Bevorzugt weist das Förderraumelement eine Vorspannung auf, insbesondere um das Förderelement in Richtung der Antriebseinheit und/oder einer Anpresseinheit der Fördervorrichtung mit einer Kraft zu beaufschlagen. Vorzugsweise ist das Förderelement, insbesondere die Fördermembran, federelastisch ausgebildet. Unter "federelastisch" soll insbesondere eine Eigenschaft eines Elements, insbesondere des Förderelements, verstanden werden, die insbesondere zu einer Erzeugung einer von einer Veränderung einer Gestalt des Elements abhängigen und vorzugsweise zu der Veränderung proportionalen Gegenkraft vorgesehen ist, die der Veränderung entgegenwirkt. Das Förderelement, insbesondere die Fördermembran, ist bevorzugt wiederholt verformbar, insbesondere ohne dass dadurch das Förderelement, insbesondere die Fördermembran, mechanisch beschädigt oder zerstört wird. Bevorzugt strebt das Förderelement, insbesondere die Fördermembran, insbesondere nach einer Verformung selbstständig wieder einer Grundform zu, insbesondere einer bezogen auf die Konterfläche, konvex gekrümmten Grundform, insbesondere einer Nullstellung, des Förderelements, insbesondere der Fördermembran, zu. Vorzugsweise ist die federelastische Ausgestaltung des Förderelements, insbesondere der Fördermembran, mittels einer, insbesondere geometrischen, Ausgestaltung des Grundkörpers und/oder mittels einer Anordnung des Förderelements, insbesondere der Fördermembran, an dem die Konterfläche aufweisenden Förderraumelement zumindest teilweise beeinflussbar und/oder hervorrufbar. Das Förderelement, insbesondere die Fördermembran, ist bevorzugt derart an dem die Konterfläche aufweisenden Förderraumelement angeordnet, dass eine Förderung eines Fluids im und/oder durch den Förderraum infolge einer Einbeulung des Förderelements, insbesondere der Fördermembran, erfolgt. Nach einer Aufhebung einer Einwirkung einer Antriebskraft auf das Förderelement, insbesondere die Fördermembran, zu einer Förderung eines Fluids strebt die Förderfläche des Förderelements, insbesondere der Fördermembran, vorzugsweise zumindest im Wesentlichen selbsttätig, insbesondere infolge der federelastischen Ausgestaltung, wieder einer bezogen auf die Konterfläche konvex gekrümmten Anordnung zu. Das Förderelement, insbesondere die Fördermembran, ist bevorzugt aus einem gummiartigen und/oder kautschukartigen Werkstoff gebildet. Es ist jedoch auch denkbar, dass die Fördervorrichtung, insbesondere die Fördermembran, aus einem anderen, einem Fachmann als sinnvoll erscheinenden Werkstoff oder aus einer Kombination von mehreren Werkstoffen gebildet ist, der oder die eine federelastische Ausgestaltung des Förderelements, insbesondere der Fördermembran, ermöglicht/ermöglichen. Bevorzugt nutzt das Förderelement, insbesondere die Fördermembran, einen "Beuleffekt" zu einer Förderung eines Fluids im und/oder durch den Förderraum. Das Förderelement, insbesondere die Förderfläche, ist bevorzugt zu einer Förderung eines Fluids zumindest temporär einbeulbar, wobei zumindest eine Beule zu einer Förderung eines Fluids entlang der Förderfläche verschiebbar, insbesondere rollend verschiebbar, ist. Unter "vorgesehen" soll insbesondere speziell eingerichtet, speziell ausgelegt und/oder speziell ausgestattet verstanden werden. Darunter, dass ein Element und/oder eine Einheit zu einer bestimmten Funktion vorgesehen ist/sind, soll insbesondere verstanden werden, dass das Element und/oder die Einheit diese bestimmte Funktion in zumindest einem Anwendungs- und/oder Betriebszustand erfüllen/erfüllt und/oder ausführen/ausführt.

Mittels der erfindungsgemäßen Ausgestaltung kann vorteilhaft eine zuverlässige Abdichtung des Förderraums erreicht werden. Es kann eine vorteilhafte Dichtungsfunktion erreicht werden. Es kann besonders vorteilhaft eine zuverlässige Förderung eines Fluids erreicht werden. Es kann vorteilhaft eine zuverlässige Abdichtung erreicht werden. Es kann vorteilhaft einer Leckage entgegengewirkt werden. Es kann vorteilhaft eine effiziente Förderung eines Fluids realisiert werden. Vorteilhafterweise kann eine große Dichtfläche entlang einer Dichtline zwischen dem Förderraumelement und dem Förderelement erreicht werden.

Des Weiteren wird vorgeschlagen, dass die Dichtungsnut derart ausgebildet ist, dass zwischen dem Dichtungsfortsatz und einem die Dichtungsnut begrenzenden Randbereich des Förderraumelements, insbesondere zumindest in einem förderfeien und einem Förderzustand der Fördervorrichtung, eine flächige Anlage erfolgt. Unter einem "förderfreien Zustand" soll insbesondere ein Zustand der Förderfläche, insbesondere betrachtet in zumindest einem Teilbereich der Förderfläche, verstanden werden, in dem die Förderfläche in einem unverformten Zustand, insbesondere in einem von einer Konterfläche maximal beabstandeten Zustand der Förderfläche, vorliegt, und insbesondere in zumindest einem Teilbereich der Förderfläche entkoppelt ist von einer Einwirkung einer Antriebskraft zu einer Förderung eines Fördermittels mittels der Förderfläche. Der die Dichtungsnut begrenzende Randbereich bildet vorzugsweise einen Übergang von der Dichtungsnut, insbesondere von einem Nutgrund der Dichtungsnut, zur Konterfläche, an der die Förderfläche anlegbar ist. Der die Dichtungsnut begrenzende Randbereich grenzt vorzugsweise, insbesondere direkt, an die Dichtungsnut, insbesondere an den Nutgrund der Dichtungsnut, und die Konterfläche an. Bevorzugt grenzt der die Dichtungsnut begrenzende Randbereich, insbesondere direkt, an die Dichtungsnut, insbesondere an den Nutgrund der Dichtungsnut, und an eine Erhebung der Konterfläche an. Insbesondere liegen zumindest mehr als 20 %, bevorzugt mehr als 30 % und besonders bevorzugt mehr als 40 % einer gesamten Außenfläche des Dichtungsüberstands an dem die Dichtungsnut begrenzenden Randbereich an. Mittels der erfindungsgemäßen Ausgestaltung kann vorteilhaft eine mehrdimensionale Dichtungsfunktion erreicht werden. Es kann besonders vorteilhaft eine zuverlässige Förderung eines Fluids erreicht werden. Es kann vorteilhaft eine zuverlässige Abdichtung erreicht werden. Es kann vorteilhaft einer Leckage entgegengewirkt werden. Es kann vorteilhaft eine effiziente Förderung eines Fluids realisiert werden.

Ferner wird vorgeschlagen, dass die Dichtungsnut und ein die Dichtungsnut begrenzender, insbesondere der zuvor bereits genannte, Randbereich des Förderraumelements, der an einer einer, insbesondere die bereits zuvor genannte, Förderfläche des Grundkörpers des Förderelements zugewandten Seite der Dichtungsnut angeordnet ist, derart ausgebildet sind, dass eine flächige Anlage des Dichtungsfortsatzes an dem die Dichtungsnut begrenzenden Randbereich des Förderraumelements und an einem Nutgrund der Dichtungsnut erfolgt. Insbesondere liegen zumindest mehr als 50 %, bevorzugt mehr als 70 % und besonders bevorzugt mehr als 80 % der gesamten Außenfläche des Dichtungsüberstands an einer Innenfläche der und an der die Dichtungsnut begrenzenden Randbereich an. Mittels der erfindungsgemäßen Ausgestaltung kann vorteilhaft eine mehrdimensionale Dichtungsfunktion realisiert werden. Es kann vorteilhaft eine zuverlässige Abdichtung erreicht werden. Es kann vorteilhaft einer Leckage entgegengewirkt werden. Es kann vorteilhaft eine effiziente Förderung eines Fluids realisiert werden. Es kann besonders vorteilhaft eine zuverlässige Förderung eines Fluids erreicht werden.

Zudem wird vorgeschlagen, dass die Dichtungsnut sich vollständig um eine, insbesondere die bereits zuvor genannte, Konterfläche des Förderraumelements, die zu einem Fördern eines Fluids mit einer, insbesondere die bereits zuvor genannte, Förderfläche des Grundkörpers des Förderelements zusammenwirkt, erstreckt und die Konterfläche begrenzt. Die Dichtungsnut ist vorzugsweise an einem Randbereich des Förderraumelements angeordnet. Vorzugsweise ist die Konterfläche vollständig von der Dichtungsnut umschlossen. Die Dichtungsnut erstreckt sich vollständig um die Konterfläche herum. Betrachtet entlang einer zumindest im Wesentlichen senkrecht zur Hauptförderrichtung und/oder zumindest im Wesentlichen parallel zur Antriebsachse der Antriebseinheit verlaufenden Richtung sind die Dichtungsnut und die Konterfläche derart angeordnet, das in einem Querschnitt des Förderraumelements zuerst die Dichtungsnut, insbesondere ein Teilabschnitt der Dichtungsnut, angeordnet ist, darauffolgend die Konterfläche angeordnet ist und darauffolgend wieder die Dichtungsnut, insbesondere ein weiterer Teilabschnitt der Dichtungsnut, angeordnet ist. Mittels der erfindungsgemäßen Ausgestaltung kann vorteilhaft eine große Dichtfläche realisiert werden. Es kann vorteilhaft erreicht werden, dass der Förderraum zuverlässig abgedichtet wird. Es kann vorteilhaft einer Leckage entgegengewirkt werden. Es kann vorteilhaft eine effiziente Förderung eines Fluids realisiert werden. Es kann besonders vorteilhaft eine zuverlässige Förderung eines Fluids erreicht werden.

Des Weiteren wird vorgeschlagen, dass der Dichtungsfortsatz sich vollständig um eine, insbesondere die bereits zuvor genannte, Förderfläche des Grundkörpers des Förderelements erstreckt und die Förderfläche begrenzt. Vorzugsweise erstreckt sich der Dichtungsüberstand oder der gesamte Dichtungsfortsatz vollständig entlang des Außenrands des Förderelements um den Grundkörper herum. Mittels der erfindungsgemäßen Ausgestaltung kann vorteilhaft eine große Dichtfläche realisiert werden. Es kann vorteilhaft erreicht werden, dass der Förderraum zuverlässig abgedichtet wird. Es kann vorteilhaft einer Leckage entgegengewirkt werden. Es kann vorteilhaft eine effiziente Förderung eines Fluids realisiert werden. Es kann besonders vorteilhaft eine zuverlässige Förderung eines Fluids erreicht werden.

Ferner wird vorgeschlagen, dass der Dichtungsfortsatz zu einem Randbereich des Grundkörpers des Förderelements einen Übergangsbereich aufweist, der einen Querschnitt aufweist, der verschieden ist von einem Querschnitt eines weiteren Übergangsbereichs des Dichtungsfortsatzes zu einer Förderfläche des Grundkörpers. Der Übergangsbereich des Dichtungsfortsatzes ist auf einer der Förderfläche abgewandten Seite des Dichtungsfortsatzes angeordnet. Vorzugsweise ist der Übergangsbereich des Dichtungsfortsatzes tangential übergehend an eine Außenkontur des Dichtungsüberstands angeordnet. Der weitere Übergangsbereichs des Dichtungsfortsatzes ist auf einer der Förderfläche zugewandten Seite des Dichtungsfortsatzes angeordnet. Der weitere Übergangsbereich des Dichtungsfortsatzes grenzt vorzugsweise in einem geometrischen Wendepunkt an die Außenkontur des Dichtungsüberstands an. Mittels der erfindungsgemäßen Ausgestaltung kann vorteilhaft eine große Anlagefläche zwischen dem die Dichtungsnut begrenzenden Randbereich und dem Dichtungsfortsatz erreicht werden. Es kann vorteilhaft eine mehrdimensionale Dichtungsfunktion realisiert werden. Es kann vorteilhaft eine zuverlässige Abdichtung erreicht werden. Es kann vorteilhaft einer Leckage entgegengewirkt werden. Es kann vorteilhaft eine effiziente Förderung eines Fluids realisiert werden. Es kann besonders vorteilhaft eine zuverlässige Förderung eines Fluids erreicht werden.

Des Weiteren wird vorgeschlagen, dass die Fördervorrichtung zumindest eine Anpresseinheit umfasst, die zumindest ein Anpresselement, insbesondere zumindest einen Klemmring aufweist, das dazu vorgesehen ist, den Dichtungsfortsatz mit einer Anpresskraft in Richtung des Förderraumelements zu beaufschlagen und den Dichtungsfortsatz zumindest in dem Bereich der Dichtungsnut zu komprimieren. Vorzugsweise ist die Anpresseinheit dazu vorgesehen, entlang einer, insbesondere entlang einer Umfangsrichtung des Förderelements verlaufenden, Dichtungslinie des Förderelements eine inhomogene Anpresskraftverteilung zu erzeugen. Bevorzugt wird eine Erzeugung einer inhomogenen Anpresskraft infolge einer speziellen geometrischen Ausgestaltung einer Anpressfläche eines Anpresselements und/oder einer speziellen geometrischen Ausgestaltung eines Dichtungsfortsatzes des Förderelements realisiert. Insbesondere ist eine Ausgestaltung oder ein Verlauf/Verteilung der inhomogenen Anpresskraft abhängig von maximalen Kraftspitzen oder maximalen Belastungsspitzen entlang der Dichtungslinie, die einer Förderung eines Fluids, insbesondere dessen Komprimierung mittels eines Zusammenwirkens des Förderelements und des Förderraumelements durch eine Einwirkung einer Antriebseinheit einer die Fördervorrichtung umfassenden Pumpe geschuldet sind, verteilt. Vorzugsweise ist die Anpresseinheit derart ausgebildet, dass der Dichtungsfortsatz des Förderelements an unterschiedlichen Positionen entlang des Förderelements oder der Dichtungslinie unterschiedlich stark komprimiert wird, insbesondere infolge eines Zusammenwirkens zumindest der Anpresseinheit, insbesondere zumindest eines Anpresselements der Anpresseinheit, und des Dichtungsfortsatzes. Das Förderelement kann eine längliche, insbesondere gestreckte, Ausgestaltung oder eine kreisringförmige Ausgestaltung aufweisen. Eine grundsätzliche Funktionsweise der Anpresseinheit in Bezug auf eine Erzeugung einer inhomogenen Anpresskraft oder auf eine inhomogene Kompression entlang der Dichtungslinie ist vorzugsweise unabhängig von einer Formgebung des Förderelements an sich. Das Förderelement kann als flache Fördermembran, als kreisringförmige Fördermembran oder als andere, an einem Fachmann als sinnvoll erscheinende Fördermembran ausgebildet sein, wie beispielsweise als teller- oder scheibenförmige Fördermembran o. dgl. Eine geometrische Ausgestaltung der Anpressfläche und eine geometrische Ausgestaltung des mit der Anpressfläche zusammenwirkenden Dichtungsfortsatzes sind vorzugsweise verantwortlich für eine Erzeugung einer inhomogenen Anpresskraft oder für eine inhomogene Kompression entlang der Dichtungslinie.

Das Förderelement weist vorzugsweise entlang der maximalen Gesamterstreckung des Dichtbereichs, insbesondere entlang einer maximalen Umfangserstreckung des ringförmigen Förderelements, infolge einer Ausgestaltung der Anpresseinheit, insbesondere infolge einer geometrischen Ausgestaltung der Anpressfläche, an unterschiedlichen Positionen des Dichtbereichs eine inhomogene Kompression auf. Das Förderelement wird durch die Anpresseinheit, insbesondere infolge einer geometrischen Ausgestaltung der Anpressfläche, entlang der maximalen Gesamterstreckung des Dichtbereichs, insbesondere entlang einer maximalen Umfangserstreckung des ringförmigen Förderelements unterschiedlich stark komprimiert. Die Anpresseinheit weist zumindest ein Anpresselement, insbesondere zumindest einen Klemmring, auf, wobei das Förderelement ringförmig ausgebildet ist und, insbesondere der Dichtungsfortsatz des Förderelements, mittels des Anpresselements an einen Innenumfang des ringförmigen Förderraumelements angedrückt wird, insbesondere entlang der maximalen Gesamterstreckung des Dichtbereichs unterschiedliche stark an das Förderraumelement angepresst wird. Das Anpresselement bewirkt eine Anpresskraft auf das Förderelement, die zumindest im Wesentlichen parallel zu einer Rotationsachse eines Antriebselements der Antriebseinheit verläuft. Bevorzugt bewirkt das Anpresselement eine weitere Anpresskraft auf das Förderelement, die quer, insbesondere zumindest im Wesentlichen senkrecht, zur Rotationsachse des Antriebselements verläuft. Insbesondere umfasst das Anpresselement einen umlaufenden Bund zu einer Erzeugung einer Anpresskraft auf das Förderelement, die im Wesentlichen parallel zur Rotationsachse des Antriebselements verläuft. Vorzugsweise umfasst die Anpresseinheit zumindest zwei Anpresselemente, insbesondere zumindest zwei Klemmringe, mittels denen das Förderelement, insbesondere der Dichtungsfortsatz des Förderelements an den Innenumfang des ringförmigen Förderraumelements angedrückt wird, insbesondere entlang der maximalen Gesamterstreckung des Dichtbereichs unterschiedliche stark an das Förderraumelement angepresst wird. Das Förderelement ist vorzugsweise zwischen den zumindest zwei Anpresselementen innerhalb des Förderraumelements angeordnet.

Bevorzugt drückt das Anpresselement den Dichtungsfortsatz, insbesondere zumindest entlang einer Umfangsrichtung des Förderraumelements, an das Förderraumelement, insbesondere mit einer entlang der Umfangsrichtung inhomogenen Anpresskraft, an. Vorzugsweise ist eine Hauptwirkungsrichtung der inhomogenen Anpresskraft quer, insbesondere zumindest im Wesentlichen senkrecht, zur Rotationsachse des Antriebselements ausgerichtet. Das Anpresselement weist vorzugsweise eine Anpressfläche auf, die entlang einer, insbesondere entlang einer Umfangsrichtung des Anpresselements verlaufenden, maximalen Längserstreckung der Anpressfläche ein variierendes Niveau aufweist, insbesondere einen variierenden Abstand relativ zu einer der Anpressfläche abgewandten Fläche, insbesondere einer Innenfläche, des Anpresselements. Das variierende Niveau der Anpressfläche wird vorzugsweise durch eine unterschiedliche Wölbung entlang eines Gesamtverlaufs der Anpressfläche, insbesondere entlang einer in einer sich zumindest im Wesentlichen senkrecht zur Rotationsachse des Antriebselements erstreckenden Ebene verlaufenden Umfangsrichtung, gebildet. Denkbar ist jedoch auch, dass das variierende Niveau der Anpressfläche durch unterschiedliche maximale Höhen von Erhebungen in der Anpressfläche, insbesondere entlang der in der sich zumindest im Wesentlichen senkrecht zur Rotationsachse des Antriebselements erstreckenden Ebene verlaufenden Umfangsrichtung, gebildet wird. Auch denkbar ist, dass das variierende Niveau der Anpressfläche durch unterschiedliche maximale Stärken eines Rands, insbesondere eines Bunds, des Anpresselements, an dem die Anpressfläche auf einer dem Förderelement angeordneten Seite an dem Anpresselement angeordnet ist, gebildet wird. Weitere, einem Fachmann als sinnvoll erscheinende Ausgestaltungen der Anpressfläche zu einer Realisierung des variierenden Niveaus der Anpressfläche sind ebenfalls denkbar.

Alternativ oder zusätzlich ist denkbar, dass der Dichtungsfortsatz, der mittels der Anpresseinheit an einen Innenumfang des ringförmigen Förderraumelements angedrückt wird, und eine entlang einer, insbesondere entlang einer Umfangsrichtung des Förderelements verlaufende, maximale Längserstreckung aufweist und eine variierende maximale Stärke aufweist. Vorzugsweise wird die maximale Stärke von einer maximalen Erstreckung, insbesondere einer maximalen Höhe, des Dichtungsfortsatzes, insbesondere betrachtet entlang einer zumindest im Wesentlichen senkrecht zur Förderfläche verlaufenden Richtung, gebildet. Es ist jedoch auch denkbar, dass die maximale Stärke des Dichtungsfortsatzes von einer maximalen Erstreckung des Dichtungsüberstands ausgehend von der Förderfläche, insbesondere betrachtet entlang einer zumindest im Wesentlichen senkrecht zur Förderfläche verlaufenden Richtung, gebildet wird. Bevorzugt wird der Dichtungsfortsatz mittels des zumindest einen Anpresselements, insbesondere eines Klemmrings, der Anpresseinheit in die zumindest Dichtungsnut hineingepresst, wobei eine Kompression des Dichtungsfortsatzes entlang einer, insbesondere entlang einer Umfangsrichtung des Förderelements verlaufenden, maximalen Längserstreckung des Dichtungsfortsatzes inhomogen ist. Alternativ oder zusätzlich zu einem variierenden Niveau der Anpressfläche und/oder der variierenden Stärke des Dichtungsfortsatzes ist es auch denkbar, dass die Dichtungsnut ein variierendes Niveau aufweist, insbesondere zu einer Realisierung einer inhomogenen Anpresskraft entlang der Dichtlinie. Mittels der erfindungsgemäßen Ausgestaltung kann eine vorteilhafte Wirkung der Anpresseinheit erreicht werden. Es kann vorteilhaft eine mehrdimensionale Anpresswirkung auf das Förderelement realisiert werden. Es kann vorteilhaft eine zuverlässige Abdichtung erreicht werden. Es kann vorteilhaft einer Leckage entgegengewirkt werden. Es kann vorteilhaft eine effiziente Förderung eines Fluids realisiert werden. Es kann besonders vorteilhaft eine zuverlässige Förderung eines Fluids erreicht werden.

Zudem vorgeschlagen, dass der Dichtungsfortsatz sich entlang einer quer, insbesondere zumindest im Wesentlichen senkrecht, zu einer, insbesondere der bereits zuvor genannten, Förderfläche des Grundkörpers des Förderelements verlaufenden Richtung über die Förderfläche hinweg erstreckt. Vorzugsweise erstreck sich zumindest der Dichtungsüberstand des Dichtungsfortsatz, ausgehend von der Förderfläche, über die Förderfläche hinweg, insbesondere entlang einer quer, insbesondere zumindest im Wesentlichen senkrecht, zur Förderfläche verlaufenden Richtung. Mittels der erfindungsgemäßen Ausgestaltung kann eine vorteilhafte Dichtwirkung des Dichtungsfortsatzes erreicht werden. Es kann vorteilhaft eine zuverlässige Abdichtung erreicht werden. Es kann vorteilhaft einer Leckage entgegengewirkt werden. Es kann vorteilhaft eine effiziente Förderung eines Fluids realisiert werden. Es kann besonders vorteilhaft eine zuverlässige Förderung eines Fluids erreicht werden.

Des Weiteren wird eine Pumpe mit zumindest einer erfindungsgemäßen Fördervorrichtung vorgeschlagen. Vorzugsweise ist die Pumpe zu einer Verwendung in einem Nahrungsmittelbereich, in einem Chemiebereich, in einem Pharmabereich, insbesondere zu einer chargen konformen Nutzung, in einem Vivariumbereich (Aquarium usw.), in einem Haushaltsmaschinenbereich, in einem Zahnhygienebereich, in einem Automobilbereich, in einem medizinischen Bereich, in einem Wasseraufbereitungsbereich o. dgl. vorgesehen. Bevorzugt umfasst die Pumpe zumindest eine, insbesondere die bereits zuvor genannte, Antriebseinheit, die zumindest ein, insbesondere das bereits zuvor genannte, Antriebselement, insbesondere zumindest eine Exzenterwelle, aufweist, die von dem Förderraumelement, dem Förderelement und der Anpresseinheit, insbesondere betrachtet entlang einer um eine Antriebsachse der Antriebseinheit verlaufenden Umfangsrichtung, größtenteils umgeben ist. Vorzugsweise ist die Antriebseinheit, insbesondere zumindest das Antriebselement, durch das Förderraumelement, das Förderelement und die Anpresseinheit, insbesondere betrachtet entlang der um die Antriebsachse der Antriebseinheit verlaufenden Umfangsrichtung, vollständig umgeben. Mittels der erfindungsgemäßen Ausgestaltung kann vorteilhaft eine kompakte und leistungsstarke Pumpe realisiert werden. Es kann vorteilhaft eine hohe Servicefreundlichkeit erreicht werden, insbesondere da die Fördervorrichtung als Ganzes zusammen mit der Antriebseinheit von einem Gehäuse entnehmbar ist. Förderung eines Fördermittels realisiert werden.

Die Pumpe und/oder die Fördervorrichtung sollen/soll hierbei nicht auf die oben beschriebene Anwendung und Ausführungsform beschränkt sein. Insbesondere können/kann die Pumpe und/oder die Fördervorrichtung zu einer Erfüllung einer hierin beschriebener Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Pumpe mit einer erfindungsgemäßen Fördervorrichtung in einer schematischen Darstellung,
- Fig. 2: die erfindungsgemäße Pumpe mit einem geöffneten Gehäuse in einer schematischen Darstellung,
- Fig. 3: eine Schnittansicht durch die erfindungsgemäße Pumpe in einer schematischen Darstellung,
- Fig. 4: eine weitere Schnittansicht durch die erfindungsgemäße Pumpe in einer schematischen Darstellung,
- Fig. 5: die erfindungsgemäße Fördervorrichtung in einem aus dem Gehäuse der Pumpe entnommenen Zustand in einer schematischen Darstellung,
- Fig. 6: ein Förderelement der erfindungsgemäßen Fördervorrichtung in einer schematischen Darstellung,
- Fig. 7: ein Förderraumelement der erfindungsgemäßen Fördervorrichtung in einer schematischen Darstellung,
- Fig. 8: eine Teilschnittansicht durch das Förderelement und das Förderraumelement in einer schematischen Darstellung,
- Fig. 9: ein Anpresselement einer Anpresseinheit der erfindungsgemäßen Fördervorrichtung in einer schematischen Darstellung und
- Fig. 10: ein Fluidzuleitungsadapter oder ein Fluidableitungsadapter der erfindungsgemäßen Fördervorrichtung in einer schematischen Darstellung.

### Beschreibung des Ausführungsbeispiels

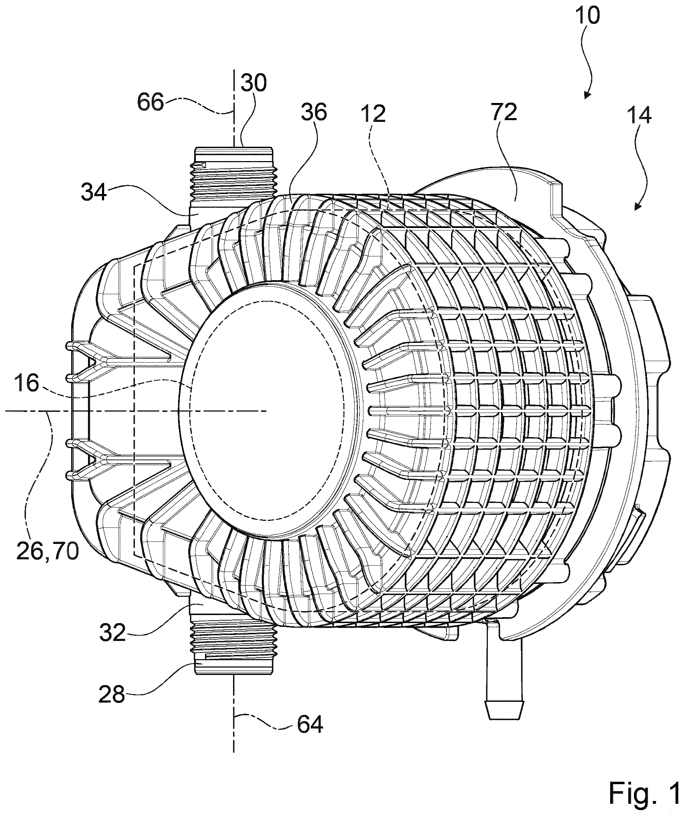

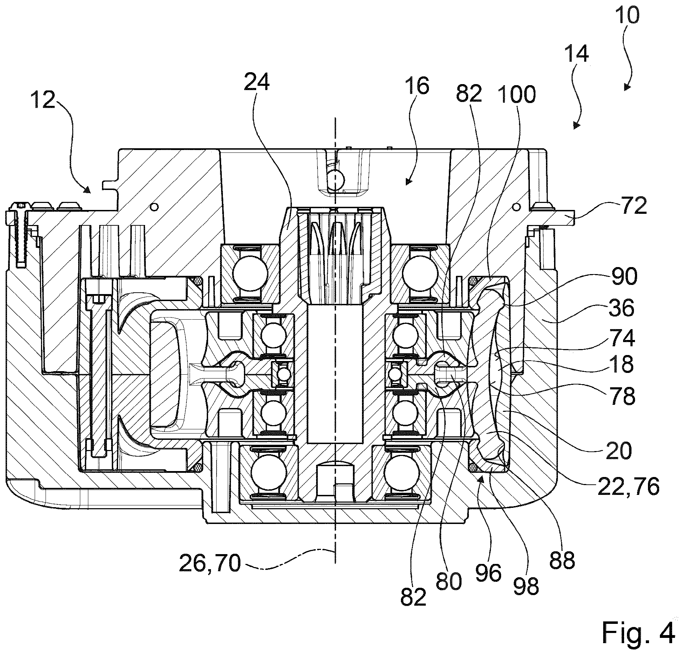

Figur 1 zeigt eine Pumpe 10 mit zumindest einer Fördervorrichtung 12 zu einer Förderung zumindest eines Fluids (hier nicht näher dargestellt). Die Fördervorrichtung 12 ist zumindest zu einem Fördern eines Fluids vorgesehen, insbesondere infolge einer Einwirkung einer Antriebseinheit 16 der Pumpe 10 auf die Fördervorrichtung 12, insbesondere auf ein elastisch verformbares Förderelement 22 der Fördervorrichtung 12. Die Fördervorrichtung 12 umfasst zumindest einen Förderraum 18, zumindest ein den Förderraum 18 zumindest teilweise begrenzendes Förderraumelement 20, das formstabil ausgebildet ist, und zumindest das elastisch verformbare, insbesondere ringförmige, Förderelement 22, das zusammen mit dem Förderraumelement 20 den Förderraum 18 begrenzt und an dem Förderraumelement 20 angeordnet ist (vgl. Figur 4). Das Förderelement 22 ist vorzugsweise als Fördermembran ausgebildet. Das Förderraumelement 20 ist zumindest zu einem Großteil, insbesondere vollständig, aus einem Kunststoff, insbesondere aus einem spritzgegossenen Kunststoff, gebildet. Es ist jedoch auch denkbar, dass das Förderraumelement 20 aus einem andere, einem Fachmann als sinnvoll erscheinenden Werkstoff gebildet ist. Das Förderelement 22 ist vorzugsweise zumindest zu einem Großteil, insbesondere vollständig, aus einem Kautschuk, insbesondere einem Synthesekautschuk, wie beispielsweise EPDM, FKM, NBR o. dgl., gebildet. Es ist jedoch auch denkbar, dass das Förderelement 22 aus einem andere, einem Fachmann als sinnvoll erscheinenden Werkstoff gebildet ist.

Die Pumpe 10 umfasst zumindest die Antriebseinheit 16 zu einer Einwirkung auf die Fördervorrichtung 12 und zumindest ein Gehäuse 14 zu einer Aufnahme der Fördervorrichtung 12. Die Antriebseinheit 16 umfasst vorzugsweise zumindest ein Antriebselement 24 zu einer Einwirkung auf die Fördervorrichtung 12 (vgl. Figur 4). Das Antriebselement 24 ist vorzugsweise als Exzenterwelle ausgebildet. Es ist jedoch auch denkbar, dass das Antriebselement 24 eine andere, einem Fachmann als sinnvoll erscheinende Ausgestaltung aufweist, wie beispielsweise eine rotationssymmetrische Welle, auf der zumindest ein Exzenter zu einer Einwirkung auf die Fördervorrichtung 12 angeordnet ist o. dgl. Das Antriebselement 24 kann direkt, insbesondere drehfest, oder indirekt, wie beispielsweise mittels einer Getriebeeinheit oder mittels zumindest eines Zahnradelements, mit einer Antriebswelle einer Motoreinheit (hier nicht näher dargestellt), wie beispielsweise eines Elektromotors, eines Verbrennungsmotors, eines Pneumatikmotors o. dgl., verbunden sein. Das Antriebselement 24 weist eine Rotationsachse 26 auf, die quer, insbesondere zumindest im Wesentlichen senkrecht, zu einer Hauptförderrichtung, entlang derer ein Fluid durch den Förderraum 18 förderbar ist, verläuft.

Vorzugsweise ist die Fördervorrichtung 12 zumindest zu einem Großteil, insbesondere vollständig, innerhalb des Gehäuses 14 angeordnet. Das Gehäuse 14 umgibt die Fördervorrichtung 12 zumindest zu einem Großteil, insbesondere vollständig. Insbesondere ist das Gehäuse 14 auf eine, einem Fachmann bekannte Art und Weise dazu vorgesehen, die Fördervorrichtung 12 und/oder die Antriebseinheit 16 der Pumpe 10 zumindest teilweise, insbesondere vollständig, zu umhüllen und/oder zu lagern. Das Gehäuse 14 kann aus einem Kunststoff, aus einem Metall, aus einer Kombination aus Kunststoff und Metall oder aus einem anderen, einem Fachmann als sinnvoll erscheinenden Material gebildet sein. Das Gehäuse 14 kann eine Schalenbauweise, eine Topfbauweise, eine Kombination aus einer Schalenbauweise und einer Topfbauweise oder eine andere, einem Fachmann als sinnvoll erscheinende Bauweise aufweisen.

Das Gehäuse 14 ist zumindest getrennt von dem Förderraumelement 20 der Fördervorrichtung 12, insbesondere von der Fördervorrichtung 12 als Ganzes, ausgebildet, insbesondere derart, dass das Förderraumelement 20, insbesondere die Fördervorrichtung 12, als Ganzes aus dem Gehäuse 14 entnehmbar ist. Vorzugsweise ist das Förderraumelement 20, insbesondere die Fördervorrichtung 12, als Ganzes nach einer Demontage eines Gehäuseoberteils 36 aus dem Gehäuse 14 entnehmbar, insbesondere zusammen mit dem am Förderraumelement 20 angeordneten Förderelement 22. Die Fördervorrichtung 12 ist vorzugsweise entkoppelt von einer Demontage von Einzelteilen der Fördervorrichtung 12 als Ganzes aus dem Gehäuse 14 entnehmbar, insbesondere nach einer Demontage des Gehäuseoberteils 36 des Gehäuses 14. Das Gehäuse 14 umgibt zumindest das Förderraumelement 20, insbesondere die Fördervorrichtung 12, entlang einer in einer sich zumindest im Wesentlichen senkrecht zu einer Antriebsachse 70 der Antriebseinheit 16 erstreckenden Ebene verlaufenden Umfangsrichtung zumindest zu einem Großteil, insbesondere In einem in dem Gehäuse 14 angeordneten Zustand der Fördervorrichtung 12, insbesondere der Fördervorrichtung 12 als Ganzes.

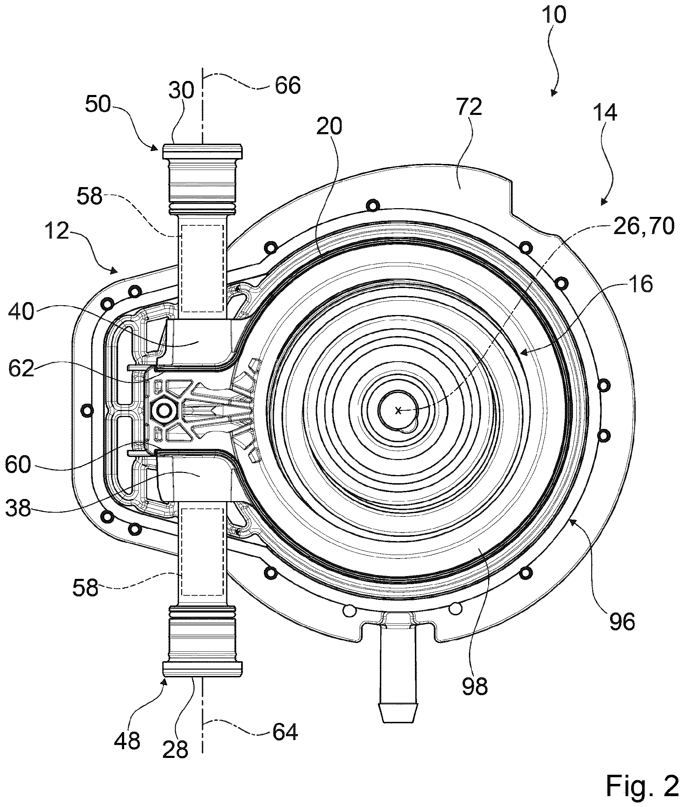

Das Förderraumelement 20 ist, betrachtet entlang einer quer zur Antriebsachse 70 der Antriebseinheit 16 verlaufenden Richtung, zumindest zwischen dem Gehäuse 14 und dem Förderelement 22 der Fördervorrichtung 12 angeordnet, insbesondere direkt benachbart zum Gehäuse 14 oder direkt anliegend am Gehäuse 14 (vgl. Figur 2). Die Fördervorrichtung 12 umgibt die Antriebseinheit 16 zumindest in einem in dem Gehäuse 14 angeordneten Zustand der Fördervorrichtung 12 zumindest im Wesentlichen vollständig, insbesondere entlang einer Umfangsrichtung, die in einer sich zumindest im Wesentlichen senkrecht zur Antriebsachse 70 der Antriebseinheit 16 erstreckenden Ebene verläuft. Das Förderraumelement 20 weist eine Außenseite auf, die in einem an dem Gehäuse 14 angeordneten Zustand der Fördervorrichtung 12 kraft- und/oder formschlüssig mit einer Innenseite des Gehäuses 14 verbunden ist, insbesondere an der Innenseite des Gehäuses 14, vorzugsweise direkt, anliegt. In einem in dem Gehäuse 14 angeordneten Zustand der Fördervorrichtung 12, insbesondere der Fördervorrichtung 12 als Ganzes, liegt die Außenseite des Förderraumelements 20 bevorzugt zumindest teilweise an der Innenseite des Gehäuses 14, insbesondere zumindest an einer Innenseite eines Gehäuseunterteils 72 des Gehäuses 14, an. Vorzugsweise liegen mehr als 30 %, bevorzugt mehr als 40 %, besonders bevorzugt weniger als 95 % und ganz besonders bevorzugt zwischen 40 % und 60 % einer gesamten Außenfläche der Außenseite des Förderraumelements 20 an der Innenseite des Gehäuses 14, insbesondere an der Innenseite eines Gehäuseunterteils 72 des Gehäuses 14, an. Das Gehäuse 14 umfasst vorzugsweise eine Ausnehmung, in der die Fördervorrichtung 12 anordenbar, insbesondere angeordnet, ist. Die Ausnehmung des Gehäuses 14, insbesondere des Gehäuseunterteils 72, wird vorzugsweise durch einen bundartigen Fortsatz im Inneren des Gehäuses 14, insbesondere des Gehäuseunterteils 72, begrenzt. Der bundartige Fortsatz erstreckt sich über weniger als 360°, insbesondere um eine Anordnung eines Ein- und Auslassbereichs der Fördervorrichtung 12 in dem Gehäuse 14, insbesondere in dem Gehäuseunterteil 72, zu ermöglichen.

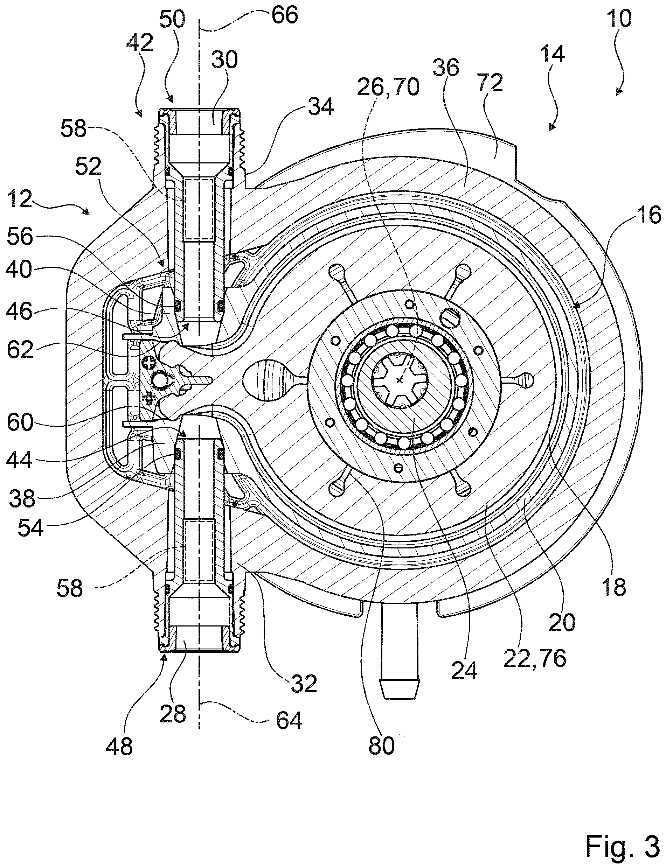

Des Weiteren umfasst das Gehäuse 14 zumindest eine Aufnahme 32, insbesondere zumindest zwei Aufnahmen 32, 34, zu einer Aufnahme zumindest eines Fluidzuleitungsadapters 28 und/oder eines Fluidableitungsadapters 30 der Fördervorrichtung 12. Der Fluidzuleitungsadapters 28 ist bevorzugt zu einer Verbindung mit einer Fluidleitung vorgesehen, insbesondere um eine Zuführung von Fluid zum Förderraum 18 zu realisieren. Der Fluidableitungsadapters 30 ist bevorzugt zu einer Verbindung mit einer Fluidleitung vorgesehen, insbesondere um eine Ableitung von Fluid aus dem Förderraum 18 zu realisieren. Vorzugsweise ist/sind die Aufnahme/n 32, 34 in dem Gehäuseoberteil 36 des Gehäuses 14 angeordnet (vgl. Figuren 1 und 3). Es ist jedoch auch denkbar, dass die Aufnahme/n 32, 34 in einem anderen Bauteil des Gehäuses 14, wie beispielsweise im Gehäuseunterteil 72 o. dgl. angeordnet ist/sind. Bevorzugt ist der Fluidzuleitungsadapter 28 und/oder der Fluidableitungsadapters 30 mittels einer form- und/oder kraftschlüssigen Verbindung mit der/den Aufnahme/n 32, 34 verbunden, insbesondere an der/den Aufnahme/n 32, 34 fixiert. Beispielsweise umfasst/umfassen die Aufnahme/n 32, 34 an einer Innenseite ein Innengewinde zu einer Fixierung des Fluidzuleitungsadapters 28 und/oder des Fluidableitungsadapters 30 an dem Gehäuse 14, insbesondere an dem Gehäuseoberteil 36 (vgl. Figur 3). Es ist jedoch auch denkbar, dass der Fluidzuleitungsadapter 28 und/oder der Fluidableitungsadapter 30 mittels einer, insbesondere gewindefreien, formschlüssigen Verbindung, wie beispielsweise mittels eines Einsteckens in die Aufnahme/n 32, 34, an der/den Aufnahme/n 32, 34 angeordnet, insbesondere gesichert, sind/ist. Die Aufnahme/n 32, 34 erstreckt/erstrecken sich ausgehend von einer Außenseite des Gehäuses 14, insbesondere des Gehäuseoberteils 36, durchgehend bis zu einer Innenseite des Gehäuses 14, insbesondere des Gehäuseoberteils 36. Die Aufnahme/n 32, 34 ist/sind vorzugsweise als Durchgangsöffnung/en von der Außenseite zu der Innenseite des Gehäuses 14 ausgebildet. Der Fluidzuleitungsadapter 28 und/oder der Fluidableitungsadapter 30 erstrecken/erstreckt sich in einem im Gehäuse 14 angeordneten Zustand der Fördervorrichtung 12 ausgehend von dem Förderraumelement 20 zumindest bis zur Außenseite des Gehäuses 14, insbesondere darüber hinaus, vorzugsweise in einem verbundenen Zustand eines Anschlussstutzens 38 des Förderraumelements 20 mit dem Fluidzuleitungsadapter 28 und/oder in einem verbundenen Zustand eines, insbesondere weiteren, Anschlussstutzens 40 des Förderraumelements 20 mit dem Fluidableitungsadapter 30 (vgl. Figur 3).

Der Anschlussstutzen 38 und/oder der, insbesondere weitere, Anschlussstutzen 40 sind/ist, insbesondere jeweils, an zumindest einem Querfortsatz 60, 62 des Förderraumelements 20 angeordnet, insbesondere einteilig mit dem entsprechenden Querfortsatz 60, 62 ausgebildet (vgl. Figuren 2, 3, 5 und 7). Insbesondere weist das Förderraumelement 20, betrachtet in einer Ebene, insbesondere in einer zumindest im Wesentlichen senkrecht zu einer Rotationsachse 26 des Antriebselements 24, insbesondere zur Antriebsachse 70 der Antriebseinheit 16, verlaufenden Ebene, eine Querschnittsform auf, die sich im Wesentlichen aus einem Kreisbogen oder einem offenen Ring, der sich entlang eines Winkelbereichs von weniger als 360° und insbesondere von mehr als 90° erstreckt, und den zwei quer zum Kreisbogen oder zum offenen Ring verlaufenden Querfortsätzen 60, 62, die direkt an den Kreisbogen oder den offenen Ring angrenzen, insbesondere in Endbereichen des Kreisbogens oder des offenen Rings, zusammensetzt. Der Anschlussstutzen 38 und/oder der, insbesondere weitere, Anschlussstutzen 40 weisen/weist, insbesondere jeweils, eine Haupterstreckungsachse 64, 66 auf, die quer, insbesondere zumindest im Wesentlichen senkrecht, zu einer Haupterstreckungsebene des zumindest einen Querfortsatz 60, 62, insbesondere des jeweiligen Querfortsatzes 60, 62, verläuft. Bevorzugt verlaufen/verläuft die Haupterstreckungsachse/n 64, 66 des Anschlussstutzens 38 und/oder des, insbesondere weiteren, Anschlussstutzens 40 quer, insbesondere zumindest im Wesentlichen senkrecht, zur Hauptförderrichtung des Förderraums 18, entlang derer ein Fluid durch den Förderraum 18 förderbar ist. Vorzugsweise verlaufen/verläuft die Haupterstreckungsachse/n 64, 66 des Anschlussstutzens 38 und/oder des, insbesondere weiteren, Anschlussstutzens 40 zumindest im Wesentlichen parallel zu der zumindest im Wesentlichen senkrecht zur Rotationsachse 26 des Antriebselements 24 verlaufenden Ebene. Der Anschlussstutzen 38 und der, insbesondere weitere, Anschlussstutzen 40 sind unterschiedlich, insbesondere entgegengesetzt, ausgerichtet an der dem Förderelement 22 abgewandten Seite, insbesondere an der Außenseite, des Förderraumelements 20 angeordnet. Vorzugsweise erstrecken sich der Anschlussstutzen 38 und der, insbesondere weitere, Anschlussstutzen 40 ausgehend von der Außenseite des Förderraumelements 20 in unterschiedliche, insbesondere entgegengesetzte, Richtungen. Vorzugsweise erstrecken sich der Anschlussstutzen 38 und der, insbesondere weitere, Anschlussstutzen 40 ausgehend von der Außenseite des Förderraumelements 20 in von dem Förderraumelement 20 abgewandte Richtungen, wobei die Richtungen entgegengesetzt ausgerichtet sind.

Der Anschlussstutzen 38 und/oder der, insbesondere weitere, Anschlussstutzen 40 sind/ist in einem in dem Gehäuse 14 angeordneten Zustand der Fördervorrichtung 12 relativ zu einer Innenwand des Gehäuses 14, insbesondere zumindest des Gehäuseoberteils 36 und/oder des Gehäuseunterteils 72, beabstandet angeordnet, insbesondere betrachtet entlang der Haupterstreckungsachse/n 64, 66 des Anschlussstutzens 38 und/oder des, insbesondere weiteren Anschlussstutzens 40 (vgl. Figuren 2 und 3). Bevorzugt sind/ist der Anschlussstutzen 38 und/oder der, insbesondere weitere, Anschlussstutzen 40 entlang eines gesamten Umfangs des Anschlussstutzens 38 und/oder des, insbesondere weiteren, Anschlussstutzens 40 in einem in dem Gehäuse 14 angeordneten Zustand der Fördervorrichtung 12 relativ zur Innenwand des Gehäuses 14, insbesondere relativ zu einer Innenseite des Gehäuseoberteils 36 und/oder zu einer Innenseite des Gehäuseunterteils 72, beabstandet angeordnet. Insbesondere ist ein minimaler Abstand des Anschlussstutzens 38 und/oder des, insbesondere weiteren, Anschlussstutzens 40 relativ zur Innenwand des Gehäuses 14, relativ zur Innenseite des Gehäuseoberteils 36 und/oder zur Innenseite des Gehäuseunterteils 72, größer als 0,001 mm, vorzugsweise größer als 0,01 mm, besonders bevorzugt größer als 0,1 mm und ganz besonders bevorzugt kleiner als 10 mm. Vorzugsweise weist der minimale Abstand des Anschlussstutzens 38 und/oder des, insbesondere weiteren, Anschlussstutzens 40 relativ zur Innenwand des Gehäuses 14, insbesondere relativ zur Innenseite des Gehäuseoberteils 36 und/oder zur Innenseite des Gehäuseunterteils 72, einen Wert aus einem Werteberiech von 0,1 mm bis 5 mm auf. Es ist jedoch auch denkbar, dass der Anschlussstutzen 38 und/oder der, insbesondere weitere, Anschlussstutzens 40 in einer alternativen Ausgestaltung der Pumpe 10 an der Innenwand des Gehäuses 14, insbesondere an der Innenseite des Gehäuseoberteils 36 und/oder an der Innenseite des Gehäuseunterteils 72, anliegt, insbesondere sich in einem in dem Gehäuse 14 angeordneten Zustand der Fördervorrichtung 12 an der Innenwand des Gehäuses 14, insbesondere an der Innenseite des Gehäuseoberteils 36 und/oder an der Innenseite des Gehäuseunterteils 72, abstützt.

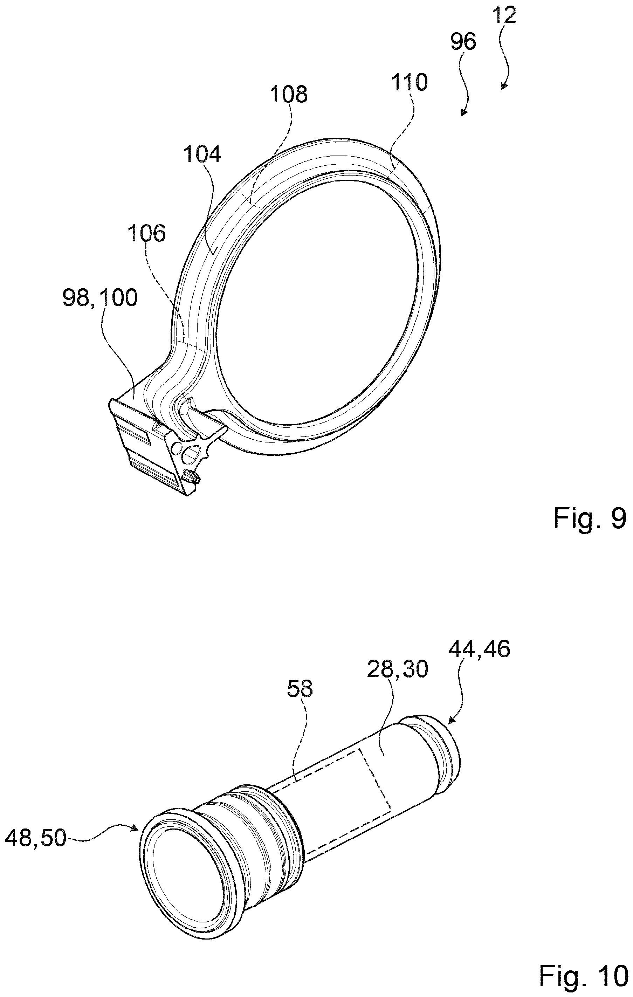

Das Förderraumelement 20 umfasst zumindest den Anschlussstutzen 38 für den, insbesondere verschieden von einem Schlauch ausgebildeten, Fluidzuleitungsadapter 28 und/oder zumindest den, insbesondere weiteren, Anschlussstutzen 40 für den, insbesondere verschieden von einem Schlauch ausgebildeten, Fluidableitungsadapter 30, die/der an einer dem Förderelement 22 abgewandten Seite, insbesondere an der Außenseite, des Förderraumelements 20 angeordnet sind/ist (vgl. Figuren 2, 3, 5 und 7). Der Fluidzuleitungsadapter 28 und/oder der Fluidableitungsadapter 30 sind/ist vorzugsweise rohrförmig ausgebildet. Der Fluidzuleitungsadapter 28 und/oder der Fluidableitungsadapter 30 weisen/weist vorzugsweise ein konisch verlaufendes Einführende 44, 46 (vgl. Figuren 3 und 10). Das Einführende 44, 46 des Fluidzuleitungsadapters 28 und/oder des Fluidableitungsadapters 30 ist in einem am Förderraumelement 20 angeordnete Zustand des Fluidzuleitungsadapters 28 und/oder des Fluidableitungsadapters 30 in dem Anschlussstutzen 38 bzw. in dem, insbesondere weiteren, Anschlussstutzen 40 angeordnet. Bevorzugt umfasst/umfassen der Fluidzuleitungsadapter 28 und/oder der Fluidableitungsadapter 30 ein Kopplungsende 48, 50 zu einer Verbindung mit einer Zufuhrleitung bzw. mit einer Abfuhrleitung zu einer Zuleitung bzw. einer Ableitung eines Fluids aus dem bzw. in den Förderraum 18 Es ist auch denkbar, dass der Fluidzuleitungsadapter 28 und/oder der Fluidableitungsadapter 30 zu einer Verbindung mit anderen, einem Fachmann als sinnvoll erscheinenden Bauteilen, wie beispielsweise Fluidkupplungsstücken, Schlauchtüllen o. dgl. vorgesehen sind/ist. Das Kopplungsende 48, 50 ist an einer dem Einführende 44, 46 abgewandten Seite des Fluidzuleitungsadapters 28 bzw. des Fluidableitungsadapters 30 angeordnet. Bevorzugt weisen der Fluidzuleitungsadapter 28 und der Fluidableitungsadapter 30 eine zumindest im Wesentlichen identische Ausgestaltung auf. Es ist jedoch auch denkbar, dass der Fluidzuleitungsadapter 28 und der Fluidableitungsadapter 30 zumindest teilweise verschieden voneinander ausgebildet sind, wie beispielsweise in einer Ausgestaltung einer Funktionseinheit 58 o. dgl.

Die Fördervorrichtung 12 umfasst zumindest eine Funktionseinheit 58, insbesondere eine Filtereinheit und/oder eine Ventileinheit, und den Fluidzuleitungsadapter 28 und/oder den Fluidableitungsadapter 30, wobei die Funktionseinheit 58 zumindest teilweise, insbesondere vollständig, in dem Fluidzuleitungsadapter 28 und/oder in dem Fluidableitungsadapter 30 angeordnet ist (vgl. Figuren 2, 3 und 10). Vorzugsweise ist die Funktionseinheit 58 zumindest teilweise, insbesondere vollständig, in den Fluidzuleitungsadapter 28 und/oder in den Fluidableitungsadapter 30 fest integriert oder zumindest teilweise, insbesondere vollständig, austauschbar in dem Fluidzuleitungsadapter 28 und/oder in dem Fluidableitungsadapter 30 angeordnet. Die Funktionseinheit 58 kann beispielsweise eine, insbesondere zwei, Filter- und/oder Ventilpatrone/n aufweisen, die in dem Fluidzuleitungsadapter 28 bzw. in dem Fluidableitungsadapter 30 angeordnet ist/sind. Andere, einem Fachmann als sinnvoll erscheinenden Ausgestaltungen oder Anordnungen der Funktionseinheit 58 sind ebenfalls denkbar, wie beispielsweise eine Anordnung zwischen dem Anschlussstutzen 38 und dem Fluidzuleitungsadapter 28 bzw. zwischen dem, insbesondere weiteren, Anschlussstutzen 40 und dem Fluidableitungsadapter 30 o. dgl.

Der Fluidzuleitungsadapter 28 und/oder der Fluidableitungsadapter 30 sind/ist abnehmbar an dem Gehäuse 14, insbesondere an dem Gehäuseoberteil 36, und/oder an dem Förderraumelement 20 angeordnet. Die Pumpe 10 umfasst zumindest eine Sicherungseinheit 42 zu einer Sicherung des Fluidzuleitungsadapters 28 und/oder des Fluidableitungsadapters 30 an dem Gehäuse 14, insbesondere an dem Gehäuseoberteil 36, mittels einer form- und/oder kraftschlüssigen Verbindung. Vorzugsweise umfasst die Sicherungseinheit 42 ein, insbesondere zwei, Außengewinde, das/die insbesondere an einer Außenseite der Aufnahme/n 32, 34 angeordnet ist/sind (vgl. Figur 1). Es ist denkbar, dass die Sicherungseinheit 42 zumindest eine, insbesondere zwei, Schraubkappe/n (hier nicht näher dargestellt) umfasst, die zu einer Sicherung des Fluidzuleitungsadapters 28 und/oder des Fluidableitungsadapters 30 an dem Gehäuse 14 mit dem/den Außengewinde/n zusammenwirkt/zusammenwirken, insbesondere einen Bund des Fluidzuleitungsadapters 28 und/oder des Fluidableitungsadapters 30 festklemmen. Alternativ oder zusätzlich umfasst die Sicherungseinheit 42 vorzugsweise zumindest die an der/den Aufnahme/n 32, 34 angeordneten Innengewinde/n. Ferner ist denkbar, dass die Sicherungseinheit 42 alternativ oder zusätzlich, weitere einem Fachmann als sinnvoll erscheinende Bauteile zu einer Sicherung des Fluidzuleitungsadapters 28 und/oder des Fluidableitungsadapters 30 an dem Gehäuse 14, insbesondere an dem Gehäuseoberteil 36, mittels einer form- und/oder kraftschlüssigen Verbindung umfasst, wie beispielsweise ein Sicherungsring, ein Sicherungsstift o. dgl.

Die Fördervorrichtung 12 umfasst zumindest eine Bewegungsausgleichseinheit 52, die zumindest dazu vorgesehen ist, in einem verbundenen Zustand des Anschlussstutzens 38 mit dem Fluidzuleitungsadapter 28 Relativbewegungen zwischen dem Fluidzuleitungsadapter 28 und dem Anschlussstutzen 38 zumindest teilweise auszugleichen und/oder zu dämpfen und/oder in einem verbundenen Zustand des, insbesondere weiteren, Anschlussstutzens 40 mit dem Fluidableitungsadapter 30 Relativbewegungen zwischen dem Fluidableitungsadapter 30 und dem, insbesondere weiteren, Anschlussstutzen 40 zumindest teilweise auszugleichen und/oder zu dämpfen (vgl. Figur 3). Die Bewegungsausgleichseinheit 52 umfasst vorzugsweise zumindest ein Dämpfungselement 54, insbesondere zumindest zwei Dämpfungselemente 54, 56. Bevorzugt ist/sind das/die Dämpfungselement/e 54, 56 als O-Ring ausgebildet. Es ist jedoch auch denkbar, dass das/die Dämpfungselement/e 54, 56 eine andere, einem Fachmann als sinnvoll erscheinende Ausgestaltung aufweisen, wie beispielsweise als Elastomerscheibe, als Elastomerhohlzylinder o. dgl. Vorzugsweise ist/sind das/die Dämpfungselement/e 54, 56 zwischen dem Anschlussstutzen 38 und dem Fluidzuleitungsadapter 28 bzw. zwischen dem, insbesondere weiteren, Anschlussstutzen 40 und dem Fluidableitungsadapter 30 angeordnet. Insbesondere liegt/liegen das/die Dämpfungselement/e 54, 56 an einer Innenseite des Anschlussstutzen 38 und an einer Außenseite des Einführendes 44 des Fluidzuleitungsadapters 28 bzw. an einer Innenseite des, insbesondere weiteren, Anschlussstutzen 40 und an einer Außenseite des Einführendes 46 des Fluidableitungsadapters 30 an. Bevorzugt ist/sind das/die Dämpfungselement/e 54, 56, insbesondere zusätzlich zu einer Bewegungsdämpfung, zu einer fluidischen Abdichtung zwischen dem Anschlussstutzen 38 und dem Fluidzuleitungsadapter 28 bzw. zu einer fluidischen Abdichtung zwischen dem, insbesondere weiteren, Anschlussstutzen 40 und dem Fluidableitungsadapter 30 vorgesehen.

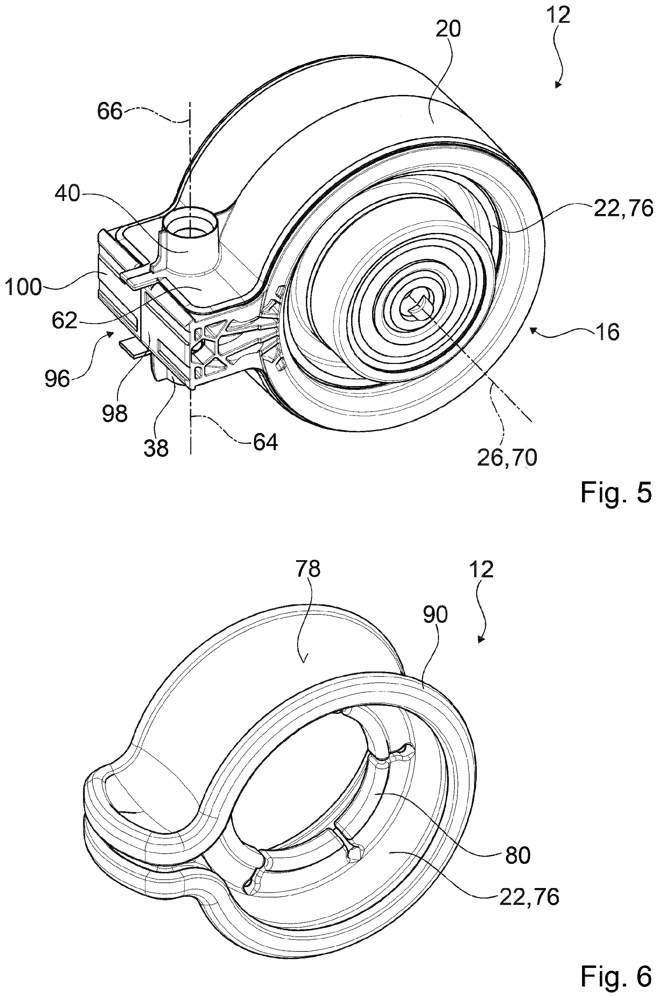

Das Förderelement 22 umfasst zumindest einen, insbesondere zumindest im Wesentlichen ringförmigen, Grundkörper 76 (vgl. Figuren 3 und 6), der elastisch verformbar ist und zumindest eine Förderfläche 78 aufweist, die an einer Förderseite des Grundkörpers 76 angeordnet ist. Ferner umfasst das Förderelement 22 vorzugsweise zumindest einen Aktivierungsfortsatz 80, insbesondere eine Vielzahl an Aktivierungsfortsätzen 80, zu einer Verbindung mit zumindest einem Übertragungselement 82 der Antriebseinheit 16, das an einer Aktivierungsseite des Grundkörpers 76 mit dem Aktivierungsfortsatz 80, insbesondere mit der Vielzahl an Aktivierungsfortsätzen 80, zusammenwirken. Vorzugsweise ist die Förderseite des Grundkörpers 76 auf einer der Aktivierungsseite des Grundkörpers 76 abgewandten Seite des Grundkörpers 76 am Grundkörper 76 angeordnet. Insbesondere bildet die Förderseite eine Außenseite des Grundkörpers 76. Vorzugsweise bildet die Aktivierungsseite eine Innenseite des Grundkörpers 76. Die Aktivierungsseite bildet insbesondere zumindest teilweise eine Innenfläche des Grundkörpers 76. Der Aktivierungsfortsatz 80, insbesondere die Aktivierungsfortsätze 80, ist/sind insbesondere einteilig mit dem Grundkörper 76 ausgebildet. Es ist jedoch auch denkbar, dass der Aktivierungsfortsatz 80, insbesondere die Aktivierungsfortsätzen 80, getrennt von dem Grundkörper 76 ausgebildet ist/sind und mittels einer, einem Fachmann als sinnvoll erscheinenden form- und/oder kraftschlüssigen Verbindung an dem Grundkörper 76 fixiert ist/sind.

Der Aktivierungsfortsatz 80, insbesondere die Aktivierungsfortsätze 80, ist/sind als Form- und/oder Kraftschlusselement/e ausgebildet, das/die zumindest zu einer Übertragung einer in eine von der Aktivierungsseite abgewandte Richtung wirkende Antriebskraft mittels einer form- und/oder kraftschlüssigen Verbindung, insbesondere mittels einer stoffschlussfreien form- und/oder kraftschlüssigen Verbindung, mit dem Übertragungselement 82 zusammenwirkt/zusammenwirken. Bevorzugt ist der Aktivierungsfortsatz 80, insbesondere die Aktivierungsfortsätzen 80, zwischen zwei Übertragungselementen 82, insbesondere Übertragungsringen, die auf dem Antriebselement 24 angeordnet sind, eingeklemmt (vgl. Figur 4). Der Aktivierungsfortsatz 80, insbesondere die Aktivierungsfortsätze 80 zusammen, weist/weisen eine maximale Längserstreckung auf, die kleiner ist als eine maximale Längserstreckung des Grundkörpers 76, insbesondere betrachtet entlang einer um die Antriebsachse 70 der Antriebseinheit 16 verlaufenden Umfangsrichtung.

Bevorzugt weist der Grundkörper 76 betrachtet in einer Ebene, insbesondere in einer zumindest im Wesentlichen senkrecht zur Antriebsachse 70 verlaufenden Ebene, eine Querschnittsform auf, die sich im Wesentlichen aus einem Kreisbogen oder einem offenen Ring und zwei quer zum Kreisbogen oder zum offenen Ring verlaufende Ein- und/oder Auslassfortsätze zusammensetzt. Der Kreisbogen oder der offene Ring der Querschnittsform des Grundkörpers 76 erstreckt sich vorzugsweise entlang eines Winkelbereichs von weniger als 360° und insbesondere von mehr als 90°. Die quer zum Kreisbogen oder zum offenen Ring verlaufende Ein- und/oder Auslassfortsätze der Querschnittsform des Grundkörpers 76 sind bevorzugt direkt an den Kreisbogen oder den offenen Ring angrenzend angeordnet, insbesondere in Endbereichen des Kreisbogens oder des offenen Rings. Der Aktivierungsfortsatz 80, insbesondere die Aktivierungsfortsätze 80, erstreckt/erstrecken sich vorzugsweise entlang eines geschlossenen Kreisrings, wobei der Aktivierungsfortsatz 80, insbesondere die Aktivierungsfortsätze 80, selbst den Kreisring bilden kann/können. Eine maximale Erstreckung des Aktivierungsfortsatzes 80 entlang einer Mittelachse des Grundkörpers 76 oder eine Gesamterstreckung der mehreren aufeinanderfolgenden Aktivierungsfortsätze 80 entlang der Mittelachse des Grundkörpers 76 ist insbesondere zumindest um 5 %, bevorzugt zumindest um 10 % und ganz besonders bevorzugt zumindest um 20 % kleiner als eine maximale Längserstreckung des Grundkörpers 76. Vorzugsweise erstreckt sich der Aktivierungsfortsatz 80 oder die mehreren aufeinanderfolgenden Aktivierungsfortsätze 80 zusammen entlang eines Winkelbereichs insbesondere von mehr als 270°, bevorzugt von weniger als 360° oder von 360° an der Aktivierungsseite.

Das Förderraumelement 20 umgibt das Förderelement 22 entlang einer, insbesondere in einer sich zumindest im Wesentlichen senkrecht zur Antriebsachse 70 der Antriebseinheit 16 erstreckenden Ebene verlaufenden, Umfangsrichtung zumindest zu einem Großteil (vgl. Figuren 3 und 5). Das Förderraumelement 20 ist ringförmig ausgebildet. Vorzugsweise weisen das Förderraumelement 20 und das Förderelement 22, insbesondere betrachtet in der sich zumindest im Wesentlichen senkrecht zur Antriebsachse 70 der Antriebseinheit 16 erstreckenden Ebene, eine zumindest im Wesentlichen analoge Form auf. Insbesondere weisen das Förderraumelement 20 und das Förderelement 22, insbesondere der Grundkörper 76 des Förderelements 22, eine Grundform auf, die einem griechischen Omega als Großbuchstaben ähnelt, wobei vorzugsweise die Fortsätze des Förderraumelements 20 und des Förderelements 22 im Vergleich zu Fortsätzen des griechischen Großbuchstabens Omega um 90° abgewinkelt sind.

Das Förderraumelement 20 weist eine zu einer Förderung eines Fluids mit der Förderfläche 78 des Förderelements 22 zusammenwirkende Konterfläche 74 auf, die dem Förderelement 22 zugewandt ist und zumindest eine in Richtung des Förderelements 22 gerichtete Erhebung 84, 86 aufweist (vgl. Figuren 4, 7 und 8). Vorzugsweise umfasst die Konterfläche 74 zumindest zwei in Richtung des Förderelements 22 gerichtete Erhebungen 84, 86. Die Erhebung/en 84, 86 erstreckt/erstrecken sich, betrachtet entlang der Umfangsrichtung, entlang einer zumindest im Wesentlichen gesamten, insbesondere kreisbogenförmig verlaufenden, Innenseite des Förderraumelements 20. Bevorzugt erstreckt/erstrecken sich die Erhebung/en 84, 86 entlang der Innenseite des Förderraumelements 20 ausgehend von einem der Querfortsätze 60, 62, entlang des Kreisbogens oder des offenen Rings bis zum anderen der Querfortsätze 60, 62.

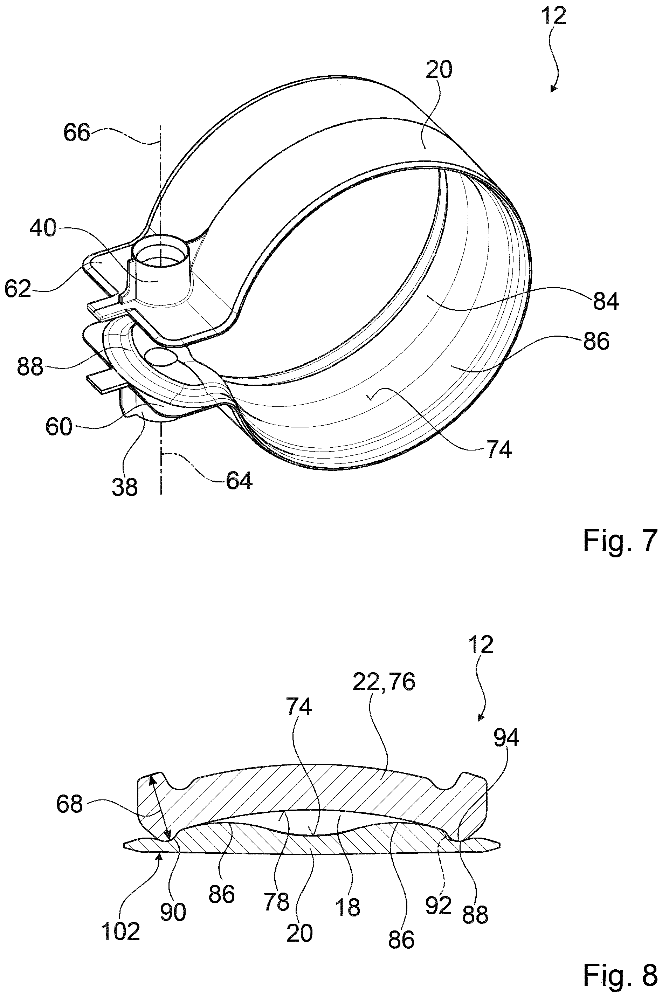

Das Förderelement 22, insbesondere der Grundkörper 76, weist die Förderfläche 78 auf, die, betrachtet in einem Querschnitt des Förderelements 22, insbesondere in einem Querschnitt des Förderraums 18, eine maximale Quererstreckung aufweist, die zumindest im Wesentlichen, insbesondere vollständig, einer maximalen Quererstreckung der Konterfläche 74 des Förderraumelements 20 entspricht (vgl. Figuren 4 und 8). Zu einer Förderung eines Fluids in und/oder durch den Förderraum 18 ist die Förderfläche 78 infolge einer Einwirkung einer von der Antriebseinheit 16 erzeugbaren Antriebskraft an die Konterfläche 74 des Förderraumelements 20 anlegbar, insbesondere vollständig anlegbar. Die Konterfläche 74 des Förderraumelements 20 weist, betrachtet in einem Querschnitt des Förderraumelements 20, zumindest drei aufeinanderfolgende Kreisbogenabschnitte auf. Die Kreisbogenabschnitte bilden die Konterfläche 74. Zwei der drei Kreisbogenabschnitte bilden die Erhebungen 84, 86 der Konterfläche 74 und sind außen angeordnet. Einer der drei Kreisbogenabschnitte bildet eine Vertiefung und ist innen, insbesondere zwischen den Erhebungen 84, 86 angeordnet. Es ist denkbar, dass die drei Kreisbogenabschnitte unterschiedliche oder gleiche Radien aufweisen.

Das Förderraumelement 20 weist zumindest einen, insbesondere an der Innenseite des Förderraumelements 20 angeordneten, Verbindungbereich, insbesondere zumindest eine Verbindungsnut, bevorzugt Dichtungsnut 88, auf, in die zumindest ein Randbereich des Förderelements 22, insbesondere ein am Rand des Förderelements 22 angeordneter Fortsatz, vorzugsweise Dichtungsfortsatz 90, des Förderelements 22, in einem am Förderraumelement 20 angeordneten Zustand eingreift, insbesondere dichtend eingreift (vgl. Figuren 4 und 8). Das Förderelement 22 weist zumindest den Dichtungsfortsatz 90 auf, der einteilig mit dem Grundkörper 76 des Förderelements 22 ausgebildet ist und in einem am Förderraumelement 20 angeordneten Zustand des Förderelements 22 zumindest teilweise in der Dichtungsnut 88 des Förderraumelements 20 angeordnet ist. Die Dichtungsnut 88 ist derart ausgebildet, dass zwischen dem Dichtungsfortsatz 90 und einem die Dichtungsnut 88 begrenzenden Randbereich 92 des Förderraumelements 20 eine flächige Anlage erfolgt. Die Dichtungsnut 88 und der die Dichtungsnut 88 begrenzende Randbereich 92 des Förderraumelements 20, der an einer der Förderfläche 78 des Grundkörpers 76 des Förderelements 22 zugewandten Seite der Dichtungsnut 88 angeordnet ist, sind derart ausgebildet, dass eine flächige Anlage des Dichtungsfortsatzes 90 an dem die Dichtungsnut 88 begrenzenden Randbereich 92 des Förderraumelements 20 und an einem Nutgrund 94 der Dichtungsnut 88 erfolgt. Die Dichtungsnut 88 erstreckt sich vollständig um die Konterfläche 74 des Förderraumelements 20 die zu einem Fördern eines Fluids mit der Förderfläche 78 des Grundkörpers 76 des Förderelements 22 zusammenwirkt, herum und begrenzt die Konterfläche 74. Vorzugsweise erstreckt sich die Dichtungsnut 88 an den Querfortsätzen 60, 62 des Förderraumelements 20 um eine Ein- bzw. Auslassöffnung im jeweiligen Querfortsatz 60, 62 herum und geht, insbesondere nahtlos, in die kreisringförmige Innenseite des Förderraumelements 20 über, insbesondere um die Konterfläche 74 zu begrenzen. Vorzugsweise erstreckt sich die Dichtungsnut 88 entlang eines gesamten innenliegenden Randbereichs des Förderraumelements 20. Das Förderraumelement 20 weist zu einem Zusammenwirken mit der Förderfläche 78 des Grundkörpers 76 des Förderelements 22 zu einem Fördern eines Fluids die Konterfläche 74 auf, die sich über die zumindest drei, insbesondere betrachtet in einem Querschnitt, aufeinanderfolgende Kreisbogenabschnitte erstreckt, wobei zumindest der die Dichtungsnut 88 begrenzende Randbereich 92 des Förderraumelements 20, insbesondere direkt, angrenzend an zumindest einen, insbesondere an einen äußeren, der drei Kreisbogenabschnitte angeordnet ist.

Der Dichtungsfortsatz 90 erstreckt sich vollständig um die Förderfläche 78 des Grundkörpers 76 des Förderelements 22 herum und begrenzt die Förderfläche 78. Vorzugsweise erstreckt sich der Dichtungsfortsatz 90 entlang eines gesamten Außenumfangs des Grundkörpers 76. Bevorzugt erstreckt sich der Dichtungsfortsatz 90 um die Ein- und/oder Auslassfortsätze des Grundkörpers 76 herum und geht, insbesondere nahtlos, in die kreisringförmige Grundform des Grundkörpers 76 über, insbesondere um die Förderfläche 78 zu begrenzen. Vorzugsweise weist der Dichtungsfortsatz 90 zu einem Randbereich des Grundkörpers 76 des Förderelements 22 einen Übergangsbereich auf, der einen Querschnitt aufweist, der verschieden ist von einem Querschnitt eines weiteren Übergangsbereichs des Dichtungsfortsatzes 90 zur Förderfläche 78 des Grundkörpers 76 (vgl. Figur 8).

Des Weiteren umfasst die Fördervorrichtung 12 zumindest eine Anpresseinheit 96, die zumindest ein Anpresselement 98, 100, insbesondere zumindest einen Klemmring aufweist, das dazu vorgesehen ist, den Dichtungsfortsatz 90 mit einer Anpresskraft in Richtung des Förderraumelements 20 zu beaufschlagen und den Dichtungsfortsatz 90 zumindest in dem Bereich der Dichtungsnut 88 zu komprimieren (vgl. Figuren 4, 5 und 9). Der Dichtungsfortsatz 90 erstreckt sich entlang einer quer, insbesondere zumindest im Wesentlichen senkrecht, zur Förderfläche 78 des Grundkörpers 76 des Förderelements 22 verlaufenden Richtung über die Förderfläche 78 hinweg. Die Anpresseinheit 96 ist, insbesondere zumindest in einem förderfreien Zustand des Förderelements 22, dazu vorgesehen ist, zumindest in einem Dichtbereich 102 zwischen dem Förderelement 22 und dem Förderraumelement 20 entlang einer maximalen Gesamterstreckung des Dichtbereichs 102, insbesondere entlang einer maximalen Umfangserstreckung zwischen dem Förderelement 22 und dem Förderraumelement 20, eine inhomogene Anpresskraft zu erzeugen. Der Dichtbereich 102 wird vorzugsweise durch ein Zusammenwirken der Dichtungsnut 88 und des Dichtungsfortsatzes 90 gebildet. Vorzugsweise wird der Dichtbereich 102 durch eine Anlagefläche zwischen dem Dichtungsfortsatz 90 und der Dichtungsnut 88 gebildet. Die Anpresseinheit 96 ist vorzugsweise dazu vorgesehen, entlang einer, insbesondere entlang einer Umfangsrichtung des Förderelements 22 verlaufenden, Dichtungslinie des Förderelements 22 eine inhomogene Anpresskraftverteilung zu erzeugen. Die Dichtungslinie wird vorzugsweise von dem Dichtungsfortsatz 90 gebildet.

Vorzugsweise ist die Anpresseinheit 96 derart ausgebildet, dass, insbesondere zumindest in einem förderfreien Zustand des Förderelements 22, das Förderelement 22 entlang der maximalen Gesamterstreckung des Dichtbereichs 102 oder der Dichtungslinie, insbesondere entlang einer maximalen Umfangserstreckung des ringförmigen Förderelements 22, eine inhomogene Kompression aufweist. Die Anpresseinheit 96 weist zumindest ein Anpresselement 98, 100, insbesondere zumindest einen Klemmring, auf, wobei das Förderelement 22 ringförmig ausgebildet ist und mittels des Anpresselements 98, 100 an einen Innenumfang des ringförmigen Förderraumelements 20 angedrückt wird. Bevorzugt umfasst die Anpresseinheit 96 zumindest zwei Anpresselemente 98, 100, insbesondere zwei Klemmringe, zwischen denen das Förderelement 22 innerhalb des Förderraumelements 20 angeordnet ist. Vorzugsweise ist das Förderelement 22 mittels den Anpresselementen 98, 100 an den Innenumfang des ringförmigen Förderraumelements 20 andrückbar. Insbesondere wird der Dichtungsfortsatz 90 durch ein Einwirken des Anpresselements 98, 100 auf das Förderelement 22 in die Dichtungsnut 88 gepresst. Die Anpresseinheit 96 weist zumindest das Anpresselement 98, 100, insbesondere zumindest den Klemmring, auf, wobei das Förderelement 22 zumindest den Dichtungsfortsatz 90 aufweist und wobei das Anpresselement 98, 100 den Dichtungsfortsatz 90, insbesondere zumindest entlang einer Umfangsrichtung des Förderraumelements 20, an das Förderraumelement 20, insbesondere mit einer entlang der Umfangsrichtung inhomogenen Anpresskraft, andrückt. Die Anpresseinheit 96 weist zumindest das Anpresselement 98, 100, insbesondere zumindest den Klemmring, auf, das eine Anpressfläche 104 aufweist, die entlang einer, insbesondere entlang einer Umfangsrichtung des Anpresselements 98, 100 verlaufenden, maximalen Längserstreckung der Anpressfläche 104 ein variierendes Niveau aufweist, insbesondere einen variierenden Abstand relativ zu einer der Anpressfläche 104 abgewandten Fläche, insbesondere einer Innenfläche, des Anpresselements 98, 100. Das variierende Niveau der Anpressfläche 104 wird vorzugsweise durch unterschiedliche maximale Höhen der Anpressfläche 104 entlang der Umfangsrichtung gebildet. Beispielhaft sind in Figur 9 drei unterschiedliche Positionen 106, 108, 110 an dem Anpresselement 98 gestrichelt angedeutet, an denen die Anpressfläche 104 zu einer Erzeugung von unterschiedlichen Kompressionsgraden des Dichtungsfortsatzes 90 vorgesehen ist. Insbesondere weist die Anpressfläche 104 an den drei unterschiedliche Positionen 106, 108, 110 unterschiedliche maximale Höhen auf, die auf unterschiedlichste Art und Weise gebildet werden kann, wie beispielsweise durch eine Veränderung einer maximalen Stärke des Anpresselements 98 an den drei Position 106, 108, 110 im Vergleich zu anderen Positionen des Anpresselements 98, durch eine Änderung eines geometrischen Verlaufs der Anpressfläche 104 auf einer dem Förderelement 22 zugewandten Seite des Anpresselements 98 oder auf eine andere, einem Fachmann als sinnvoll erscheinende Art und Weise. Beispielsweise wird der Dichtungsfortsatz 90 infolge des variierenden Niveaus an den Positionen 106, 108, 110 unterschiedlich stark komprimiert. An Position 106 wird der Dichtungsfortsatz 90 beispielsweise um insbesondere mehr als 10 %, vorzugsweise um mehr als 15 %, bevorzugt um mehr als 20 % und ganz besonders bevorzugt um mehr als 22 % einer maximalen Stärke 68 des Dichtungsfortsatzes 90 komprimiert. An Position 108 wird der Dichtungsfortsatz 90 beispielsweise um insbesondere mehr als 5 %, vorzugsweise um mehr als 10 %, bevorzugt um mehr als 15 % und ganz besonders bevorzugt um mehr als 19 % der maximalen Stärke 68 des Dichtungsfortsatzes 90 komprimiert. An Position 110 wird der Dichtungsfortsatz 90 beispielsweise um insbesondere mehr als 4 %, vorzugsweise um mehr als 8 %, bevorzugt um mehr als 14 % und ganz besonders bevorzugt um mehr als 16 % der maximalen Stärke 68 des Dichtungsfortsatzes 90 komprimiert.

Die Anpresseinheit 96 weist zumindest das Anpresselement 98, insbesondere zumindest den Klemmring, und zumindest ein weiteres Anpresselement 100, insbesondere zumindest einen weiteren Klemmring, auf, wobei das Förderelement 22 ringförmig ausgebildet ist und mittels des Anpresselements 98 und des weiteren Anpresselements 100 an einen Innenumfang des ringförmigen Förderraumelements 20 angedrückt wird, wobei das Anpresselement 98 und das weitere Anpresselement 100 an sich abgewandten Seiten des Förderelements 22 an dem Förderelement 22 angeordnet sind. Vorzugsweise weisen das Anpresselement 98 und das weitere Anpresselement 100 der Anpresseinheit 96 eine zumindest im Wesentlichen analoge Ausgestaltung auf. Das Anpresselement 98 und das weitere Anpresselement 100 sind spiegelsymmetrisch an dem Förderraumelement 20 angeordnet, insbesondere um das Förderelement 22 an das Förderraumelement 20 anzudrücken und den Dichtungsfortsatz 90 in die Dichtungsnut 88 hinein zu drücken. Das Förderraumelement 20 weist zumindest die, insbesondere entlang eines Innenumfangs des ringförmigen Förderraumelements 20 verlaufende, Nut, vorzugsweise die Dichtungsnut 88 auf, in die zumindest der Dichtungsfortsatz 90 des, insbesondere ringförmigen, Förderelements 22 mittels des Anpresselements 98, insbesondere des Klemmrings, und/oder des weiteren Anpresselements 100 der Anpresseinheit 96 hineingepresst wird, wobei eine Kompression des Dichtungsfortsatzes 90 entlang einer, insbesondere entlang einer Umfangsrichtung des Förderelements 22 verlaufenden, maximalen Längserstreckung des Dichtungsfortsatzes 90 inhomogen ist. Alternativ oder zusätzlich zu einem variierenden Niveau der Anpressfläche 104 des Anpresselements 98 und/oder des weiteren Anpresselements 100 ist es denkbar, dass das Förderelement 22 zumindest den Dichtungsfortsatz 90 aufweist, der mittels der Anpresseinheit 96 an einen Innenumfang des ringförmigen Förderraumelements 20 angedrückt wird und einen entlang der, insbesondere entlang einer Umfangsrichtung des Förderelements 22 verlaufenden, maximalen Längserstreckung des Dichtungsfortsatzes 90 variierende maximale Stärke 68 aufweist. Weitere, einem Fachmann als sinnvoll erscheinende Ausgestaltungen der Anpresseinheit 96 zu einer Erzeugung einer inhomogenen Komprimierung des Dichtungsfortsatzes 90 entlang der Umfangsrichtung im Dichtbereich 102 sind ebenfalls denkbar.

## Patentansprüche

1. Fördervorrichtung zumindest zu einem Fördern eines Fluids, mit zumindest einem Förderraum (18), mit zumindest einem den Förderraum (18) zumindest teilweise begrenzenden Förderraumelement (20), das formstabil ausgebildet ist, und mit zumindest einem elastisch verformbaren, insbesondere ringförmigen, Förderelement (22), insbesondere Fördermembran, das zusammen mit dem Förderraumelement (20) den Förderraum (18) begrenzt und an dem Förderraumelement (20) angeordnet ist, wobei das Förderelement (22) zumindest einen Dichtungsfortsatz (90) aufweist, der einteilig mit einem Grundkörper (76) des Förderelements (22) ausgebildet und in einem am Förderraumelement (20) angeordneten Zustand des Förderelements (22) zumindest teilweise in einer Dichtungsnut (88) des Förderraumelements (20) angeordnet ist, wobei das Förderraumelement (20) zu einem Zusammenwirken mit einer Förderfläche (78) des Grundkörpers (76) des Förderelements (22) zu einem Fördern eines Fluids eine Konterfläche (74) aufweist, die sich über zumindest drei, insbesondere betrachtet in einem Querschnitt, aufeinanderfolgende Kreisbogenabschnitte erstreckt, wobei zumindest eine die Dichtungsnut (88) begrenzende Randfläche (92) des Förderraumelements (20) direkt angrenzend an zumindest einen der drei Kreisbogenabschnitte angeordnet ist.

2. Fördervorrichtung nach Anspruch 1, wobei die Dichtungsnut (88) derart ausgebildet ist, dass zwischen dem Dichtungsfortsatz (90) und der die Dichtungsnut (88) begrenzenden Randfläche (92) des Förderraumelements (20) eine flächige Anlage erfolgt.

3. Fördervorrichtung nach Anspruch 1 oder 2, wobei die Dichtungsnut (88) und die die Dichtungsnut (88) begrenzende Randfläche (92) des Förderraumelements (20), der an einer der Förderfläche (78) des Grundkörpers (76) des Förderelements (22) zugewandten Seite der Dichtungsnut (88) angeordnet ist, derart ausgebildet sind, dass eine flächige Anlage des Dichtungsfortsatzes (90) an der die Dichtungsnut (88) begrenzenden Randfläche (92) des Förderraumelements (20) und an einem Nutgrund (94) der Dichtungsnut (88) erfolgt.

4. Fördervorrichtung nach einem der vorhergehenden Ansprüche, wobei die Dichtungsnut (88) sich vollständig um die Konterfläche (74) des Förderraumelements (20), die zu einem Fördern eines Fluids mit der Förderfläche (78) des Grundkörpers (76) des Förderelements (22) zusammenwirkt, erstreckt und die Konterfläche (74) begrenzt.

5. Fördervorrichtung nach einem der vorhergehenden Ansprüche, wobei der Dichtungsfortsatz (90) sich vollständig um die Förderfläche (78) des Grundkörpers (76) des Förderelements (22) erstreckt und die Förderfläche (78) begrenzt.

6. Fördervorrichtung nach einem der vorhergehenden Ansprüche, wobei der Dichtungsfortsatz (90) zu einem Randbereich des Grundkörpers (76) des Förderelements (22) einen Übergangsbereich aufweist, der einen Querschnitt aufweist, der verschieden ist von einem Querschnitt eines weiteren Übergangsbereichs des Dichtungsfortsatzes (90) zu der Förderfläche (78) des Grundkörpers.

7. Fördervorrichtung nach einem der vorhergehenden Ansprüche, umfassend zumindest eine Anpresseinheit (96), die zumindest ein Anpresselement (98, 100), insbesondere zumindest einen Klemmring aufweist, das dazu vorgesehen ist, den Dichtungsfortsatz (90) mit einer Anpresskraft in Richtung des Förderraumelements (20) zu beaufschlagen und den Dichtungsfortsatz (90) zumindest in dem Bereich der Dichtungsnut (88) zu komprimieren.

8. Fördervorrichtung nach einem der vorhergehenden Ansprüche, wobei der Dichtungsfortsatz (90) sich entlang einer quer, insbesondere zumindest im Wesentlichen senkrecht, zu der Förderfläche (78) des Grundkörpers (76) des Förderelements (22) verlaufenden Richtung über die Förderfläche (78) hinweg erstreckt.

9. Pumpe mit zumindest einer Fördervorrichtung nach einem der vorhergehenden Ansprüche.

## Claims

1. A pumping device at least for pumping a fluid, having at least one pumping space (18), having at least one pumping space element (20) which at least partially delimits the pumping space (18) and is designed to be dimensionally stable, and having at least one elastically deformable, in particular annular, pumping element (22), in particular a pumping diaphragm, which delimits the pumping space (18) together with the pumping space element (20) and is arranged on the pumping space element (20), the pumping element (22) having at least one sealing extension (90), which is formed in one piece with a base body (76) of the pumping element (22) and, in a state of the pumping element (22) arranged on the pumping space element (20), is arranged at least partially in a sealing groove (88) of the pumping space element (20), the pumping space element (20) having a counter surface (74) for cooperation with a pumping surface (78) of the base body (76) of the pumping element (22) for pumping a fluid, which extends over at least three successive circular arc sections, in particular when viewed in cross-section, wherein at least one edge surface (92) of the pumping space element (20) delimiting the sealing groove (88) is arranged directly adjacent to at least one of the three circular arc sections.

2. The pumping device according to claim 1, wherein the sealing groove (88) is designed such that a flat contact takes place between the sealing extension (90) and the edge surface (92) of the pumping space element (20) delimiting the sealing groove (88).

3. The pumping device according to claim 1 or 2, wherein the sealing groove (88) and the edge surface (92) of the pumping space element (20) delimiting the sealing groove (88), which is arranged on a side of the sealing groove (88) facing the pumping surface (78) of the base body (76) of the pumping element (22), are designed such that a flat contact of the sealing extension (90) on the edge surface (92) of the pumping space element (20) delimiting the sealing groove (88) and on a groove base (94) of the sealing groove (88) takes place.

4. The pumping device according to any one of the preceding claims, wherein the sealing groove (88) extends completely around the counter surface (74) of the pumping space element (20), which cooperates with the pumping surface (78) of the base body (76) of the pumping element (22) to pump a fluid, and delimits the counter surface (74).

5. The pumping device according to any one of the preceding claims, wherein the sealing extension (90) extends completely around the pumping surface (78) of the base body (76) of the pumping element (22) and delimits the pumping surface (78).

6. The pumping device according to any one of the preceding claims, wherein the sealing extension (90) has a transition region to an edge region of the base body (76) of the pumping element (22), which has a cross section that is different from a cross section of a further transition region of the sealing extension (90) to the pumping surface (78) of the base body.

7. The pumping device according to any one of the preceding claims, comprising at least one pressing unit (96) which has at least one pressing element (98, 100), in particular at least one clamping ring, which is intended to apply a pressing force to the sealing extension (90) in the direction of the pumping space element (20) and to compress the sealing extension (90) at least in the region of the sealing groove (88).

8. The pumping device according to any one of the preceding claims, wherein the sealing extension (90) extends across the pumping surface (78) in a direction running transversely, in particular at least substantially perpendicularly, to the pumping surface (78) of the base body (76) of the pumping element (22).

9. A pump with at least one pumping device according to any one of the preceding claims.

## Revendications

1. Dispositif de transport pour au moins un transport d'un fluide, avec au moins une chambre de transport (18), avec au moins un élément de chambre de transport (20) délimitant au moins partiellement la chambre de transport (18), qui est conçu de façon indéformable, et avec au moins un élément de transport (22) déformable élastiquement, en particulier de forme annulaire, en particulier une membrane de transport, qui délimite la chambre de transport (18) conjointement avec l'élément de chambre de transport (20) et est disposé sur l'élément de chambre de transport (20), dans lequel l'élément de transport (22) présente au moins une extension d'étanchéité (90), qui est formée d'un seul tenant avec un corps de base (76) de l'élément de transport (22) et qui, dans un état de l'élément de transport (22) disposé sur l'élément de chambre de transport (20), est disposée au moins partiellement dans une rainure d'étanchéité (88) de l'élément de chambre de transport (20), dans lequel l'élément de chambre de transport (20) présente une contre-surface (74) pour une coopération avec une surface de transport (78) du corps de base (76) de l'élément de transport (22) pour un transport d'un fluide, qui s'étend sur au moins trois sections d'arc de cercle successives, en particulier lorsqu'elle est vue en coupe transversale, dans lequel au moins une surface de bord (92) de l'élément de chambre de transport (20) délimitant la rainure d'étanchéité (88) est disposée directement adjacente à au moins une des trois sections d'arc de cercle.

2. Dispositif de transport selon la revendication 1, dans lequel la rainure d'étanchéité (88) est conçue de telle sorte qu'un appui à plat se produit entre l'extension d'étanchéité (90) et la surface de bord (92) de l'élément de chambre de transport (20) délimitant la rainure d'étanchéité (88).

3. Dispositif de transport selon la revendication 1 ou 2, dans lequel la rainure d'étanchéité (88) et la surface de bord (92) de l'élément de chambre de transport (20) délimitant la rainure d'étanchéité (88), qui est disposée sur un côté de la rainure d'étanchéité (88) tourné vers la surface de transport (78) du corps de base (76) de l'élément de transport (22), sont conçues de telle sorte qu'un appui à plat du prolongement d'étanchéité (90) s'effectue sur la surface de bord (92) de l'élément de chambre de transport (20) délimitant la rainure d'étanchéité (88) et sur un fond de rainure (94) de la rainure d'étanchéité (88).

4. Dispositif de transport selon l'une quelconque des revendications précédentes, dans lequel la rainure d'étanchéité (88) s'étend complètement autour de la contre-surface (74) de l'élément de chambre de transport (20), qui coopère avec la surface de transport (78) du corps de base (76) de l'élément de transport (22) pour transporter un fluide, et délimite la contre-surface (74).

5. Dispositif de transport selon l'une des revendications précédentes, dans lequel l'extension d'étanchéité (90) s'étend complètement autour de la surface de transport (78) du corps de base (76) de l'élément de transport (22) et délimite la surface de transport (78).

6. Dispositif de transport selon l'une quelconque des revendications précédentes, dans lequel l'extension d'étanchéité (90) présente une zone de transition vers une zone de bord du corps de base (76) de l'élément de transport (22), qui présente une section transversale différente d'une section transversale d'une autre zone de transition de l'extension d'étanchéité (90) vers la surface de transport (78) du corps de base.

7. Dispositif de transport selon l'une quelconque des revendications précédentes, comprenant au moins une unité de pression (96) qui présente au moins un élément de pression (98, 100), en particulier au moins une bague de serrage, qui est destinée à appliquer une force de pression sur l'extension d'étanchéité (90) en direction de l'élément de chambre de transport (20) et à comprimer l'extension d'étanchéité (90) au moins dans la zone de la rainure d'étanchéité (88).

8. Dispositif de transport selon l'une quelconque des revendications précédentes, dans lequel l'extension d'étanchéité (90) s'étend sur la surface de transport (78) dans une direction s'étendant transversalement, en particulier au moins sensiblement perpendiculairement, à la surface de transport (78) du corps de base (76) de l'élément de transport (22).

9. Pompe avec au moins un dispositif de transport selon l'une quelconque des revendications précédentes.
